# EUROPÄISCHE PATENTSCHRIFT

(11) **EP 0 490 945 B1**
(45) Veröffentlichungstag und Bekanntmachung des Hinweises auf die Patenterteilung: **09.02.1994**
(21) Anmeldenummer: 90913404.1
(22) Anmeldetag: 03.09.1990
(51) Int. Cl.: B60L 13/10, B61B 13/08

(54) **MAGNETSCHWEBEBAHN-TRANSPORTSYSTEM FÜR KRAFTFAHRZEUGE**
MAGNETIC SUSPENSION TRANSPORT SYSTEM FOR MOTOR VEHICLES
SYSTEME DE TRANSPORT PAR SUSPENSION MAGNETIQUE POUR VEHICULES AUTOMOBILE

(30) Priorität: 08.09.1989 AT 2115/89
(43) Veröffentlichungstag der Anmeldung: 24.06.1992
(73) Patentinhaber: Lift Verkaufsgeräte-Gesellschaft m.b.H., A-1050 Wien (AT)
(72) Erfinder: SCHUBERT, Otto, A-1050 Wien (AT)
(74) Vertreter: Weinzinger, Arnulf, Dipl.-Ing.
(86) Internationale Anmeldenummer: AT9000087
(87) Internationale Veröffentlichungsnummer: WO9103387

(56) Entgegenhaltungen:
- GB-A- 1 213 997
- US-A- 3 750 803
- PATENT ABSTRACTS OF JAPAN vol. 8, no. 9 (M-268)(1446) 14 Januar 1984, & JP-A-58 172902 (TOKYO SHIBAURA) 11 Oktober 1983,

## Beschreibung

Die Erfindung betrifft ein Magnetschwebebahn-Transportsystem für Kraftfahrzeuge, insbesondere Lastkraftwagen, mit wenigstens einer, wenigstens eine im wesentlichen flach ausgebildete Magnetschwebe-Plattform mittels eines Magnetsystems tragenden und führenden Fahrbahn, die zumindest auf einem wesentlichen Teil ihrer Länge überdacht, z.B. in einer Tunnelröhre angeordnet ist, wobei an der Oberseite der Fahrbahn und Unterseite der Magnetschwebe-Plattform auf bestimmten Abschnitten der Fahrbahn im Normalbetrieb miteinander zusammenarbeitende Seitenführungseinrichtungen vorgesehen sind.

Es wurden bereits zahlreiche Konzepte für Magnetschwebebahnen entwickelt und getestet, wobei auch bereits die verschiedensten konstruktiven Einzelheiten, wie etwa die Realisierung der Tragkraft für das Magnetschwebefahrzeug mit Hilfe von magnetischen Anziehungs-oder aber Abstoßungskräften, Steuer- bzw. Schaltvorrichtungen für Wechselmagnete, Linearmotoren für den Vortrieb des Fahrzeuges, spezielle Magnet- bzw. Polausbildungen für das Tragen und die seitliche Führung der Magnetschwebefahrzeuge beim Fahren mit hohen Geschwindigkeiten usw. vorgeschlagen wurden. Nur beispielsweise seien aus der Vielzahl von Veröffentlichungen auf dem Gebiet der Magnetschwebebahnen die folgenden Schriften herausgegriffen: Die EP-A-144 000 offenbart eine Magnetschwebebahn, bei der magnetische Anziehungskräfte ausgenutzt werden, um das Fahrzeug zu tragen, welches seinerseits aus einem Fahrzeugkasten besteht, der über Federn mit einem eigenen Traggestell verbunden ist; die DE-B-23 22 150 und die CH-A-563 267 befassen sich insbesondere mit Fahrbahnverzweigungen bzw. Fahrbahnweichen für Magnetschwebebahnen, wobei Lösungen mit Magnetsystemen beschrieben werden; aus der US-A-4 711 182 ist ferner eine Einrichtung mit einem an einer oberen Schiene über ein Magnetsystem aufgehängten Transportbehälter bekannt, wobei die Aufhängung zusätzlich Stabilisierungsrollen zur Seitenführung enthält; diese Stabilisierungsrollen sind am mit dem Transportbehälter verbundenen Aufhängungsteil gelagert und stehen mit der Führungsschiene in Kontakt.

Allen bekannten Magnetschwebebahn-Konzepten gemeinsam ist, daß hinsichtlich der Fahrzeugausbildung das herkömmliche Eisenbahnfahrzeug-Konzept im großen und ganzen übernommen wurde, und daß als Fahrbahnen in der Regel im Hochbau errichtete Schienensysteme dienen. Dies steht jedoch einem einfach zu bewerkstelligendem Lastentransport entgegen, und insbesondere ergeben sich Probleme, wenn Kraftfahrzeuge, inbesondere Lastkraftwagen, transportiert werden sollen, um - etwa aus Umweltschutzgründen -den Verkehr auf Straßen oder Autobahnen zu entlasten.

Weiters ist bei den bekannten Magnetschwebebahnen vorgesehen, die Fahrzeuge mit Linearmotoren und Elektromagneten auszurüsten und an der Fahrbahn bzw. Fahrschiene unter Umständen nur Permanentmagnete vorzusehen. Dabei ergeben sich jedoch Probleme bei der Energieversorgung der Fahrzeuge.

Aus der Literaturstelle: Otmar Krettek, "Rollen-Schweben-Gleiten", Alba Buchverlag GmbH + CoKG, Düsseldorf, 1979, Seiten 31 und 32, sind einerseits Magnetschwebesysteme mit PKW- bzw. LKW-Beförderung und andererseits die Unterbringung der Fahrbahnen in Tunnelröhren bekannt. Eine besondere Ausbildung der Schwebefahrzeuge ist jedoch nicht geoffenbart, vielmehr wurde hier offensichtlich bloß das Prinzip der Beförderung von Kraftfahrzeugen mit der Bahn auf Magnetschwebebahnen einfach übernommen. Die GB-A-1 213 997 beschreibt ein Transportsystem, beispielsweise in Form einer "sich bewegenden" Straße, wobei aber an eine Überdachung bzw. Anbringung in einer Tunnelröhre nicht gedacht war. Dies ergibt sich beispielsweise auch aus dem Hinweis, daß diese bewegliche Straße über herkömmlichen Straßen in größeren Stadtzentren installiert werden soll. An bestimmten Zutrittsstellen sollen Förderbänder als Zubringer angebracht sein. Hieraus ergibt sich ferner unmittelbar, daß dieses bekannte Transportsystem für einen umfassenden LKW-Transit-Transport nicht geeignet wäre, wobei insbesondere auch das rasche und kontinuierliche Auffahren von Kraftfahrzeugen nicht möglich wäre, vielmehr Staus an den erwähnten Förderband-Zugangsstellen zu erwarten wären.

In der DE-A-2 300 599 ist eine Magnetschwebebahn gezeigt, bei der eine Schwebeplattform versenkt, d.h. in einem röhrenartigen Gehäuse, angebracht ist, wobei an der Oberseite des Gehäuses eine Öffnung vorhanden ist, durch das ein biegesteifer Träger ragt, der eine Lasttragplattform mit der Magnetschwebeplattform verbindet, um so die Magneteinrichtungen besser (beispielsweise im Vergleich zur zuvor diskutierten GB-A-1 213 997) gegen Umwelteinflüsse zu schützen. Gemäß dieser Literaturstelle wird somit ein völlig anderer Weg beschritten, um Umwelteinflüsse, wie durch Schnee, Eis usw. auszuschalten, verglichen mit dem System der vorliegenden Art, wo das Magnetsystem dadurch geschützt wird, daß eine Trassenführung unter Dach bzw. in einem Tunnel vorgesehen wird. Auf diese Weise wird die Ausbildung der bekannten Magnetschwebebahn relativ kompliziert, wobei auch Schwachstellen in der Konstruktion dadurch gegeben sind, daß das biegesteife Verbindungselement notwendig ist, wobei insbesondere darauf hinzuweisen ist, daß für den Transport von LkW's eine besondere Stabilität und Festigkeit anzustreben ist.

Die US-A-3 750 803 offenbart sodann ein Transportsystem, das u.a. für den Transport von Kraftfahrzeugen mit hohen Geschwindigkeiten gedacht ist, wobei auch eine Unterbringung in Tunnels erwähnt ist. Dieses bekannte Transportsystem weist Magnetschwebe-Plattformen auf, die längs einer Fahrbahn mit Elektromagneten angetrieben werden, wobei überdies eine seitliche Führung, vor allem im Bereich von Fahrbahnverzweigungen, mit Hilfe magnetischer Einrichtungen bewerkstelligt wird; zusätzlich sind, für den Notfall einer Stromunterbrechung, im Bereich der Fahrbahnverzweigungen schmale Trennwände in der Fahrbahn vorgesehen. Das bekannte Transportsystem ist ferner in der Art eines Rundkurses ausgelegt, wobei Fahrbahn-Seitenstränge mit Beschleunigungsstrecken für die Fahrzeuge bzw. Stationsbereiche an Fahrbahn-Seitensträngen vorgesehen sind, in denen die Fahrzeuge anhalten und von denen sie abfahren; diese Stationsbereiche können somit jeweils als gemeinsamer Ankunfts- und Abfahrtsbereich angesehen werden.

Es sind noch weitere, an sich herkömmliche und wenig zielführende (zumindest was den Transport von Kraftfahrzeugen betrifft) Konzepte bekannt geworden. So kann noch darauf hingewiesen werden, daß in der DE-C-707 032 eine Schwebebahn mit einem elektromagnetischen Weichensystem geoffenbart ist. Bei der Bahn gemäß der DE-A-2 302 748 handelt es sich ferner um ein Fahrzeug mit Turbinenantrieb, bei dem zur seitlichen Führung ein Magnetsystem vorgesehen sein soll, und bei der Magnetschwebebahn gemäß der US-A-3 611 944 liegt eine Pendelaufhängung vor, wobei dementsprechend das magnetische Tragsystem zu adaptieren war, um eine Seitenneigung der Magnetschwebebahn zu ermöglichen.

Ziel der Erfindung ist es, ein Magnetschwebebahn-Transportsystem der eingangs angegebenen Art vorzusehen, welches möglichst einfach und dabei doch betriebssicher aufgebaut ist und überdies ein bequemes Be- und Entladen erlaubt.

Das erfindungsgemäße Magnetschwebebahn-Transportsystem der eingangs angeführten Art ist dadurch gekennzeichnet, daß die Seitenführungseinrichtungen mechanische Seitenführungs-einrichtungen sind, und daß in einer Station nebeneinander ein Ankunfts- bzw. Entladebereich und ein Abfahrts- bzw. Beladebereich vorgesehen sind und den Plattformen eine Querverschubeinrichtung zu ihrer Verschiebung allgemein quer zur Fahrtrichtung zwischen dem Ankunfts- bzw. Entladebereich der Station und dem Abfahrts- bzw. Beladebereich der Station zugeordnet ist.

Mit einer derartigen Ausbildung wird der vorstehenden Zielsetzung in besonders vorteilhafter Weise entsprochen. Die flachen Plattformen können in den Stationen, während sie einfach auf der Fahrbahn aufliegen, problemlos beladen bzw. entladen werden, beispielsweise indem die LKW's direkt auf die Plattformen auffahren bzw. von den Plattformen abfahren. Nach dem Beladen der Plattformen werden diese magnetisch angehoben und mit der vorgesehenen Transportgeschwindigkeit - die im Fall eines LKW-Transportsystems durchaus auch bei bloß 100 km/h oder sogar bloß 60 km/h liegen kann - angetrieben. Im Hinblick darauf, daß einfache, allgemeine flache Plattformen vorgesehen sind, die als Magnetschwebefahrzeuge im Betrieb über die Fahrbahn schwebend bewegt werden sollen, ist dabei ein Freihalten der verschiedenen Bauteile des Transportsystems von Verschmutzungen und dergl. und vor allem von Schnee und Eis von besonderer Bedeutung, und dies wird dadurch sichergestellt, daß die Fahrbahn überdacht bzw. in einem Tunnel angeordnet ist. Dadurch wird überdies der Vorteil erzielt, daß das Landschaftsbild, anders als bei den herkömmlichen Hochbauten, nicht beeinträchtigt wird. Die beispielsweise bei niedrigeren Transportgeschwindigkeiten, etwa im Abfahrts- oder Ankunftsbereich von Stationen, wenn die Magnetschwebebahn-Plattformen erst beschleunigt oder aber bereits abgebremst werden, zusammenarbeitenden mechanischen Seitenführungseinrichtungen können ferner verhältnismäßig einfach ausgebildet sein, und sie ermöglichen nichtsdestoweniger eine sichere Führung der Plattformen mit den Lasten darauf zu den gewünschten Stellen.

Beim vorliegenden Transportsystem werden die Plattformen zweckmäßigerweise in einer Fahrtrichtung jeweils in Reihe hintereinander befördert, wobei jedoch ein Auffächern der Fahrbahnen in den beiden Fahrtrichtungen im jeweiligen Stationsbereich, etwa zur Erleichterung der Ladetätigkeit bzw. aus Platzgründen, vorteilhaft sein wird. Um vor allem in einem solchen Fall die Plattformen, die laufend ankommen, wieder für eine Abfahrt in der Station bereitzustellen, oder ganz allgemein im Fall von zwei oder mehr Fahrbahnen in einer Station können schließlich mit der angegebenen Querverschubeinrichtung die Plattformen automatisch zwischen den Bereichen der Station bewegt werden, ohne daß etwa ein zusätzliches Manipulieren, wie Aufladen auf ein Transportfahrzeug, oder ein umständliches Rangieren, wie bei Eisenbahn-Bahnhöfen, notwendig wäre. Eine solche - mechanisch arbeitende - Querverschubeinrichtung ist im vorliegenden Fall auch deshalb problemlos möglich, weil die vorgesehenen Magnetschwebe-Plattformen im unbeladenen Zustand, anders als herkömmliche Eisenbahnwaggons, eine relativ geringe Masse haben können.

Um beim Be- bzw. Entladen ein stabiles Aufliegen der Plattformen auf der Fahrbahn zu ermöglichen, damit beispielsweise LKW's problemlos auf die Plattformen auffahren bzw. von ihnen abfahren können, ist es von besonderem Vorteil, wenn die Fahrbahn eine im allgemeinen ebene Oberseite und die oberhalb davon geführte Plattform eine im allgemeinen ebene Unterseite aufweist. An sich wäre es aber auch grundsätzlich denkbar, beispielsweise im Profil in der Art einer Kröpfung ausgebildete Plattformen und entsprechend geformte Fahrbahnen vorzusehen, wobei dadurch nicht nur ein Versteifungseffekt, sondern zugleich auch ein Seitenführungseffekt bei der Bewegung der Plattformen entlang der Fahrbahnen erzielt werden kann.

Es ist auch empfehlenswert, die Längsränder der Plattformen hochzuziehen und die Fahrbahnen mit entsprechenden hochgezogenen Führungs-Längsrändern vorzusehen, wobei in diesen Längsränderbereichen auch ein magnetisches bzw. elektromagnetisches Führungssystem, wie an sich bekannt, angeordnet werden kann.

Für eine sichere, reibungsarme Seitenführung mit Hilfe der mechanischen Seitenführungseinrichtungen ist es von besonderem Vorteil, wenn in der Fahrbahn-Oberseite ein Führungskanal eingelassen ist und an der Plattform-Unterseite wenigstens eine Führungsrolleneinheit mit wenigstens einer um eine vertikale Achse drehbaren, in den Führungskanal eingreifenden Führungsrolle angebracht ist. Vor allem ist es hier weiters vorteilhaft, wenn in der bzw. jeder Führungsrolleneinheit zwei Führungsrollen übereinander vorgesehen sind, von denen jeweils eine an einer der beiden Längsseitenwände des Führungskanals geführt ist.

Dabei könnten an sich die Führungsrollen um verschiedene vertikale Achsen drehbar sein; um hier jedoch den konstruktiven Aufwand besonders gering zu halten, hat es sich als günstig erwiesen, wenn die beiden Führungsrollen koaxial angeordnet sind und verschieden große Durchmesser haben, und zumindest eine Längsseitenwand des Führungskanals abgestuft ausgebildet ist, wobei die eine, durchmesserkleinere Führungsrolle im durch die Stufe bewirkten engeren Teil des Führungskanals an dessen abgestufter Längsseitenwand und die andere, durchmessergrößere Führungsrolle an der gegenüberliegenden Längsseitenwand des Führungskanals anliegt.

Ein Vorteil liegt bei derartigen mechanischen Seitenführungseinrichtungen auch darin, daß bei Fahrbahn-Zusammenführungen und -verzweigungen verhältnismäßig einfache Leit- bzw. Lenkeinrichtungen für die Plattformen möglich sind, die nichtsdestoweniger ein zuverlässiges Rangieren der Plattformen erlauben. So ist es inbesondere vorteilhaft, daß bei Fahrbahnzusammenführungen einer der Führungskanäle einfach direkt in den anderen einmünden kann. Bei Fahrbahn-Verzweigungen können andererseits mechanische Weichen mit seitlichen bewegbaren Führungskanal-Seitenwandteilen vorgesehen sein. Diese mechanischen Weichen können ähnlich wie herkömmliche Weichen arbeiten und betätigt werden, etwa über an sich herkömmliche elektrische bzw. elektromagnetische oder elektromechanische oder aber elektrohydraulische oder elektropneumatische Stellantriebe.

Beispielsweise ist hier eine besonders vorteilhafte Ausführungsform dadurch gekennzeichnet, daß in der Fahrbahn im Bereich der Verzweigung zumindest ein schwenkbarer Bauteil mit einem oder mehreren Führungskanal-Seitenwandteilen untergebracht ist, der bzw. die in jeder von zwei Schwenklagen eine Verbindung zu einem von zwei nachfolgenden, auseinanderführenden Führungskanälen bildet bzw. bilden. Andererseits ist es aber auch möglich, daß in der Fahrbahn im Bereich der Verzweigung ein in Querrichtung zwischen zwei Betriebsstellungen verschiebbarer Plattenbauteil mit zwei nebeneinander vorgesehenen Führungskanal-Abschnitten untergebracht ist, von denen der eine in der einen Betriebsstellung mit dem einen nachfolgenden Führungskanal und der andere in der anderen Betriebsstellung mit dem anderen nachfolgenden Führungskanal eine Verbindung herstellt.

Um die Plattformen im Stationsbereich zuverlässig abbremsen bzw. feststellen zu können, ist es weiters auch von Vorteil, wenn in einer z.B. nischenförmigen Unterbrechung zumindest einer der Längsseitenwände des Führungskanals ein aus einer Ruhelage, in der er seitlich zur Längsseitenwand ausgerichtet ist, in den Führungskanal hinein bewegbarer, z.B. schwenkbarer, Bremshebel angeordnet ist.

Für eine einfache Ausbildung der Querverschubeinrichtung kann vorgesehen werden, daß diese zumindest einen sich quer zu den Fahrbahnen erstreckenden Transportförderer mit wenigstens einem Mitnehmer für die Plattformen aufweist.

Dabei ergibt sich im Zusammenhang mit den weiter oben erwähnten mechanischen Seitenführungseinrichtungen auch eine konstruktiv vorteilhafte Möglichkeit dadurch, daß der mit den an der Plattform-Unterseite vorgesehenen Seitenführungseinrichtungen, gegebenenfalls Führungsrolleneinheiten, zusammenarbeitende Mitnehmer in wenigstens einem Querkanal aufgenommen und geführt ist. In diesem Querkanal werden dann die Plattform-Seitenführungseinrichtungen bei der Querverschiebung der Plattformen mittelbar, über die mit ihrem zusammenarbeitenden Mitnehmer, geführt.

Von besonderem Vorteil ist es hiebei weiters, wenn der in der Ruhestellung in Ausrichtung zu einem der Führungskanäle im Ankunftsbereich der Station ausgerichtete Mitnehmer eine Aufnahme in Form eines Führungskanalabschnittes für die Führungsrolleneinheiten aufweist. In der Ruhestellung bilden somit die Mitnehmer mit ihrer Aufnahme einen Teil des jeweiligen Führungskanals, d.h. die Wände der Aufnahme sind zu den Seitenwänden des übrigen Führungskanals ausgerichtet, und wenn sich die jeweilige Führungsrolleneinheit innerhalb dieser Mitnehmer-Aufnahme befindet, kann ein Querverschub, falls gewünscht, durchgeführt werden.

Zum Querverschieben kann an sich ein hin- und hergehend arbeitender Transportförderer vorgesehen werden, was sich jedoch im Hinblick auf die zumeist erforderliche große Hublänge als nicht besonders vorteilhaft erweisen kann. Demgemäß ist es günstiger, wenn, wie dies in Weiterbildung der Erfindung vorgesehen ist, der Transportförderer durch einen Endlosförderer, z.B. eine Endloskette, gebildet ist.

Eine besonders vorteilhafte Ausführungsform des erfindungsgemäßen Transportsystems ist sodann dadurch gekennzeichnet, daß im Ankunftsbereich sowie im Abfahrtsbereich der Station jeweils mehrere, in ihrer jeweiligen Anzahl gleich viele Fahrbahnen nebeneinander vorgesehen sind, um eine parallele Be-bzw. Entladung der Plattformen zu ermöglichen, und am Transportförderer zumindest gleich viele Mitnehmer vorgesehen ist, deren Abstände voneinander den Abständen der Fahrbahnen, gegebenenfalls der Seitenführungseinrichtungen bzw. Führungskanäle, entsprechen.

Für eine stabile Seitenführung der Plattformen ist es auch vorteilhaft, wenn die bzw. jede Plattform an ihrer Unterseite zwei in Fahrtrichtung hintereinander angeordnete Führungsrolleneinheiten aufweist. Dabei kann dann weiters die Querverschubeinrichtung zwei zueinander parallele Quer-Transportförderer aufweisen, deren Abstand voneinander dem Abstand der Führungsrolleneinheiten entspricht.

Was das Magnetsystem bzw. die Elektromagnetanordnung zum Tragen und Führen sowie den Linearantrieb zum Vortrieb der Magnetschwebe-Plattformen beim vorliegenden Transportsystem betrifft, so können hier an sich grundsätzlich bekannte Systeme und Anordnungen verwendet werden, insbesondere solche, bei denen magnetische Abstoßungskräfte zum Tragen der Magnetschwebefahrzeuge ausgenutzt werden. Derartige Systeme bedürfen hinsichtlich ihres Aufbaues, da sie hinlänglich bekannt und in der Literatur beschrieben sind (außer den bereits einleitend genannten Dokumenten können auch noch beispielsweise die DE-C-36 35 258, die DE-C-28 13 023, die DE-C-31 14 462, die DE-A-35 23 345 oder die CH-A-598 040 erwähnt werden) keiner weiteren Erläuterung. Es ist hier aber anzuführen, daß beim erfindungsgemäßen Transportsystem, vor allem wenn es zum Transport von LKW's und dergl. mit verhältnismäßig niedrigen Transportgeschwindigkeiten vorgesehen ist, in der Regel keine besonderen Anforderungen an das elektromagnetische Trag- und Führungssystem sowie an den Linearantrieb zu stellen sind, so daß zumeist bereits verhältnismäßig einfache, wenig aufwendige Magnetanordnungen und Steuerungen ausreichen werden.

Im Hinblick darauf, daß beim vorliegenden Transportsystem jedoch flache Schwebeplattformen als Magnetschwebe-Fahrzeuge vorgesehen sind, so daß sich Elektromagnetsysteme, Linearmotoren und zugehörige Energieversorgungseinrichtungen kaum unterbringen lassen, ist es in Abgehen vom herkömmlichen Konzept, bei dem wie erwähnt die Fahrzeuge mit diesen Einrichtungen ausgerüstet sind, erfindungsgemäß weiters von Vorteil, wenn die Plattform zumindest teilweise aus Permanentmagnetmaterial ausgebildet ist bzw. mit Permanentmagneten ausgerüstet ist, die zum Heben und Führen der Plattform mit in der Fahrbahn vorgesehenen Elektromagneten zusammenarbeiten, wobei die Fahrbahn überdies mit einem Linearmotor für die Plattform ausgerüstet ist. Auf diese Weise wird die Ausbildung der Plattform bzw. Plattformen einfach gehalten, und die mit elektrischer Energie zu versorgenden Einrichtungen werden in der stationären Fahrbahn untergebracht.

Um dabei im Fall von längeren Strecken bzw. Fahrbahnen die elektrisch zu aktivierenden Einrichtungen, nämlich Linearmotor und Elektromagnete, nicht dauernd über die gesamte Fahrbahnlänge anschalten zu müssen, wobei Energie vergeudet würde, ist es hier weiters günstig, wenn die Elektromagnete und/oder der Linearmotor in Längs-oder Fahrtrichtung in getrennte, gesondert ansteuerbare Abschnitte unterteilt sind, die aufeinanderfolgend erregbar bzw. aktivierbar sind. Die genannten Abschnitte werden dabei, etwa über eine Computersteuerung, im Takt aufeinanderfolgend, entsprechend der gewünschten Transportgeschwindigkeit für die Plattform bzw. Plattformen, angeschaltet, d.h. aktiviert. Dabei können relativ kurze Abschnitte vorgesehen sein, die jeweils gruppenweise, unter gegenseitiger Überlappung der Gruppen, aktiviert werden, um den Energieaufwand niedrig zu halten. Andererseits ist es, um die Ansteuerung für die Aktivierung der Abschnitte nacheinander möglichst einfach zu halten, manchmal auch vorteilhaft, wenn die Abschnitte in ihrer Länge ungefähr der Länge der Plattformen entsprechen.

In diesem Fall können beispielsweise zum Transport der bzw. jeder Plattform jeweils zwei benachbarte Abschnitte aktiviert werden.

Wie bereits vorstehend erwähnt eignet sich das vorliegende Transportsystem besonders zum Transport von mehreren Plattformen in Gruppen, in einem Schwebeverband, wobei die Plattformen innerhalb der Gruppe relativ geringe Abstände voneinander einhalten können. In diesem Zusammenhang kann es auch günstig sein, wenn die Abschnitte in ihrer Länge einer Gruppe von in einem Schwebeverband hintereinander zu transportierenden Plattformen entsprechen.

Um aus Energiegründen jeweils gerade nur die unbedingt notwendigen Abschnitte anschalten zu können, ist es dagegen auch vorteilhaft, wenn die Abschnitte in ihrer Länge einem Teil der Länge der Plattformen entsprechen und jeweils gleichzeitig mehrere Abschnitte hintereinander, in zumindest ungefährer Entsprechung zur Länge der Plattformen aktivierbar sind.

Um bei einem Ausfall des elektrischen Systems die Plattform oder Plattformen rasch abbremsen und so, bei einem Transport in der Gruppe, ein gegenseitiges Auffahren oder Aneinanderstoßen zu verhindern, ist es schließlich auch von Vorteil, wenn die Plattform an ihrer Unterseite mit Bremskufen oder kufen- bzw. streifenartigen Bremsbelägen versehen ist. Dabei können die Bremskufen, mit denen die jeweilige Plattform beim Ausfall des elektrischen Systems und damit der elektromagnetischen Tragkraft auf die Fahrbahn aufsetzen, auch gefedert an der Plattformunterseite angebracht sein.

Zusammenfassend kann zum erfindungsgemäßen Magnetschwebebahn-Transportsystem ausgeführt werden, daß der Einsatz von Magnetschwebe-Plattformen mit mechanischen Seitenführungseinrichtungen sowie das Vorsehen einer Querverschubeinrichtung für die Plattformen in den Stationen zwischen dem Ankunfts- und dem Abfahrbereich eine Kontinuität von LKW-Transporten ermöglicht, wobei der von den bisherigen Anschauungen in Zusammenhang mit Magnetschwebebahnen völlig divergierende Gedanke zugrundeliegt, eine höhere Anzahl von LKW-Transporten pro Zeiteinheit anstatt durch Erhöhung der Geschwindigkeit der Transportfahrzeuge durch eine Kontinuität im Transport, d.h. durch eine Vielzahl von sich hintereinander bewegenden Magnetschwebe-Plattformen (die durchaus auch mit relativ langsamer Geschwindigkeit angetrieben werden können) vorzusehen. Für die gewünschte Kontinuität ist die angegebene Querverschubeinrichtung insofern von Bedeutung, da so im Ankunfts- bzw. Abfahrtsbereich ein Abfahren bzw. Auffahren von Kraftfahrzeugen von den bzw. auf die Plattformen in Fahrtrichtung problemlos ermöglicht wird, im Gegensatz etwa zu einer Anordnung, wo eine Fahrbahn-Verbindungsstrecke zwischen Ankunftsbereich und Abfahrbereich vorgesehen ist, um die Plattform schwebend vom, Ankunftsbereich zum Abfahrbereich zu überführen: Hier müßten die Kraftfahrzeuge mehr oder weniger von der Seite her auf die Plattformen auffahren bzw. seitlich von ihnen abfahren, was mit einem höheren Zeitaufwand verbunden wäre. Durch die erfindungsgemäße Konzeption können somit Wartezeiten in den Stationen praktisch ausgeschaltet werden, d.h. durch die gegebene Kontinuität im Transport und die hiefür mitverantwortliche Querverschubeinrichtung für die Plattformen können die Kraftfahrzeuge laufend auf die in den Abfahrbereich überstellten Plattformen auffahren und sodann praktisch unmittelbar mit Hilfe dieser Plattformen abtransportiert werden bzw. im Ankunftsbereich von den laufend ankommenden Plattformen problemlos abfahren.

Die Erfindung wird nachstehend anhand von in der Zeichnung dargestellten, besonders bevorzugten Ausführungsbeispielen noch weiter erläutert. Es zeigen:
Fig. 1 eine schaubildiche Ansicht eines Teiles einer Tunnelkonstruktion mit einer Fahrbahn und einer darüber vorgesehenen Plattform, auf der ein LKW transportiert wird;
Fig. 2 eine schematische Ansicht dieses Transportsystems gemäß Fig. 1;
Fig. 3 eine schaubildliche Ansicht ähnlich Fig. 1 eines demgegenüber etwas modifizierten Transportsystems;
Fig. 4 eine zum Transportsystem gemäß Fig. 3 gehörige schematische Ansicht ähnlich Fig. 2;
Fig. 5 eine schematische Teil-Stirnansicht einer etwa bei einem Transportsystem gemäß Fig. 1 und 2 vorgesehenen mechanischen Seitenführungseinrichtung mit zwei in einem Führungskanal aufgenommenen Führungsrollen;
Fig. 6 eine schematische Draufsicht bzw. Schnittdarstellung etwa gemäß der Linie A-A in Fig. 5;
Fig. 7 eine der Stirnansicht gemäß Fig. 5 ähnliche Stirnansicht, wobei nun jedoch die teilweise weggebrochen gezeigte Plattform in ihrem abgesenkten Ruhezustand veranschaulicht ist;
Fig. 8 in einer schematischen Draufsicht bzw. Schnittdarstellung, entsprechend der Darstellungsart in Fig. 6, einen Teil eines Führungskanals mit darin aufgenommener Führungsrolleneinheit sowie mit einer Bremseinrichtung;
Fig. 9 eine entsprechende schematische Darstellung einer Zusammenführung von zwei in einem spitzen Winkel ineinander mündenden Fahrbahnen bzw. Führungskanälen;
die Fig. 10 und 11 in ebenfalls den Darstellungen gemäß Fig. 6, 8 oder 9 entsprechenden Draufsichten eine Verzweigung mit einer mechanischen Weiche, jeweils in einer ihrer beiden Betriebsstellungen;
die Fig. 12 und 13 bzw. 14 und 15 eine andere Ausführungsform einer Verzweigung mit Weiche, wobei die Fig. 12 und 14 in einer Draufsicht bzw. Schnittdarstellung ähnlich etwa Fig. 8, Fig. 10 bzw. 11, im allgemeinen gemäß der Linie A-A in Fig. 5, die zwei Betriebsstellungen der Weiche zeigen und die Fig. 13 und 15 zugehörige schematische Schnittdarstellungen dieser beiden Betriebsstellungen im wesentlichen gemäß der Linie B-B in Fig. 5 sind;
Fig. 16 eine schematische Draufsicht auf eine Station mit einem Ankunftsbereich und einem Abfahrtsbereich, mit jeweils mehreren aufgefächerten Fahrbahnen, wobei der Zustand des Be- und Entladens der Plattformen veranschaulicht ist;
Fig. 17 eine der Fig. 16 entsprechende schematische Draufsicht auf eine Station mit Ankunfts- und Abfahrtbereich, nunmehr jedoch in der Phase, in der der Be- bzw. Entladevorgang beendet ist und eine Gruppe von Plattformen vom Ankunftsbereich zum Abfahrtsbereich quer verschoben wird;
Fig. 18 in einer schematischen Teil-Draufsicht einen Teil einer Querverschubeinrichtung für die Plattformen;
die Fig. 19 und 20 schematische Teil-Schnittdarstellungen dieser Querverschubeinrichtung gemäß Fig. 18, im wesentlichen gemäß den Linien C-C bzw. D-D in Fig. 18;
die Fig. 21 bis 23 in den Fig. 18, 19 und 20 entsprechenden Grundriß-bzw. Querschnittsdarstellungen diese Querverschubeinrichtung in einer Phase nach ihrer Ingangsetzung aus der in den Fig. 18 bis 20 veranschaulichten Ruhestellung;
Fig. 24 eine schematische Stirnansicht eines weiteren Transportsystems, bei dem alle elektromagnetischen Einrichtungen einschließlich des Linearmotors stationär in der Fahrbahn untergebracht sind;
Fig. 25 eine ganz schematische Teil-Längsschnittdarstellung bzw. Seitenansicht der Fahrbahn dieses Transportsystems gemäß Fig. 24, zur Veranschaulichung der Unterteilung der elektromagnetischen Einrichtungen in voneinander getrennte Abschnitte;
und Fig. 26 schaubildlich einen Teil eines Schwebeverbandes einer Gruppe von Plattformen mit LKW's beim Transport.

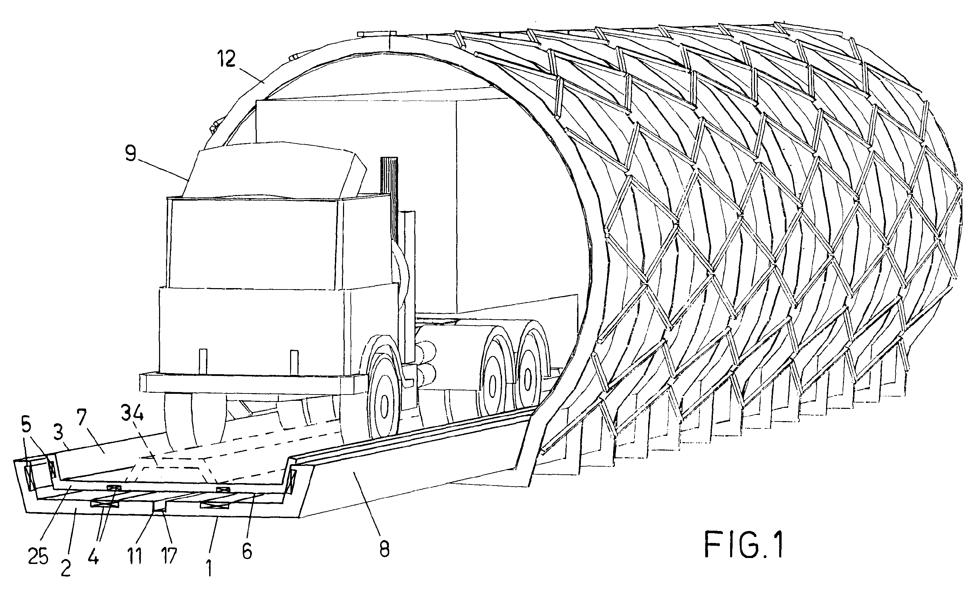

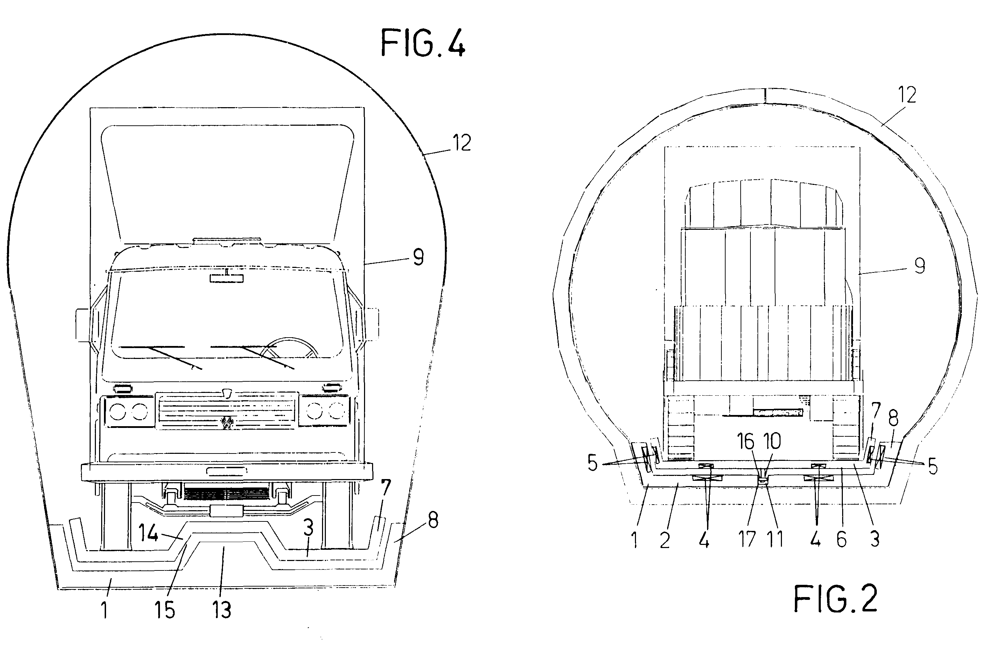

In Fig. 1 und 2 ist schematisch eine Ausführungsform eines Magnetschwebebahn-Transportsystems veranschaulicht, die derzeit als beste Ausführungsform betrachtet wird, und bei der oberhalb bzw. innerhalb einer flachen, wannenförmigen, einen breiten, ebenen Boden 2 aufweisenden Fahrbahn oder Fahrschiene 1 Magnetschwebe-Plattformen, wie die Plattform 3, durch magnetische Kräfte getragen und vorwärts bewegt werden. In Fig. 1 und 2 sind nur ganz schematisch Magnetsysteme 4, 5 zum Tragen, Antreiben und Führen der Plattformen 3 längs der Fahrbahn 1 veranschaulicht. Diese Magnetsysteme 4, 5 können in an sich herkömmlicher Weise aus Permanentmagneten und Elektromagneten mit entsprechender Ansteuerung aufgebaut sein, und sie brauchen, da sie nicht Gegenstand der vorliegenden Erfindung sind, hier nicht weiter erläutert zu werden. Beipiele für derarige Magnetsysteme können etwa den weiter oben genannten Druckschriften entnommen werden.

Ähnlich wie die Fahrbahn 1 weist auch die Plattform 3 (wenn nachstehend auf jeweils "eine" Plattform 3 bezuggenommen wird, so ist dies selbstverständlich nicht einschränkend zu verstehen, vielmehr können im vorliegenden Transportsystem zahlreiche derartige Plattformen 3 integriert sein, die längs der Fahrbahn 1 in einem Verband oder in Reihe hintereinander befördert werden können; ebenso können auch mehrere Fahrbahnen 1 nebeneinander, etwa mit entgegengesetzten Fahrtrichtungen, vorhanden sein) einen flachen, ebenen Boden 6 auf; die Längsränder 7 der Plattform 3 sind ebenso wie die Längsränder 8 der Fahrbahn 1 etwas hochgezogen, wobei sie einen spitzen Winkel mit der Vertikalen einschließen, um so einerseits die Aufnahme des Magnetsystems 5 für die Seitenführung der Plattform 3 an den beiden Längsrändern zu ermöglichen und andererseits eine Seitenbegrenzung für auf den Plattformen 3 aufzunehmende Lasten, wie insbesondere Lastkraftwagen 9, zu erzielen.

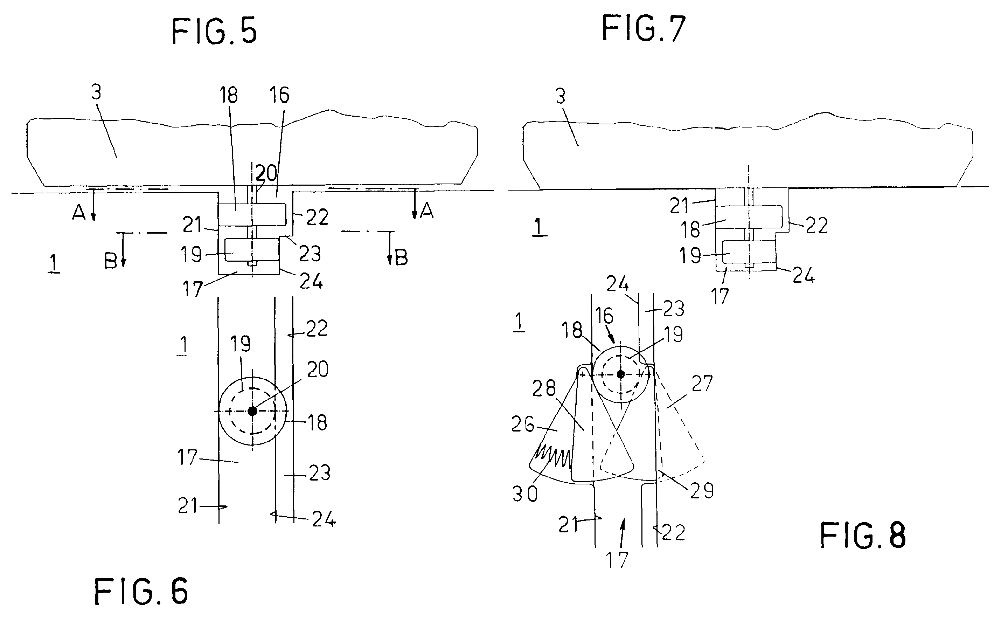

An der ebenen Unterseite der Plattform 3 sowie an der ebenen Oberseite der Fahrbahn 1 sind zusammenarbeitende mechanische Seitenführungseinrichtungen 10 bzw. 11 vorgesehen, wie schematisch in Fig. 1 (hier ist nur die Seitenführungseinrichtung 11 der Fahrbahn 1 in Form eines Längs-Führungskanals oder Leitkanals 17 ersichtlich) und Fig. 2 dargestellt ist; derartige Seitenführungseinrichtungen 10, 11 werden nachstehend anhand der Fig. 5 und 7 noch mehr im Detail erläutert werden. Es sei hier nur noch erwähnt, daß gemäß Fig. 1 und 2 als mechanische Seitenführungseinrichtung 10 an der Plattenform-Unterseite eine in Fig. 2 schematisch veranschaulichte, in den Führungskanal 17 eingreifende Führungsrolleneinheit 16 vorgesehen ist.

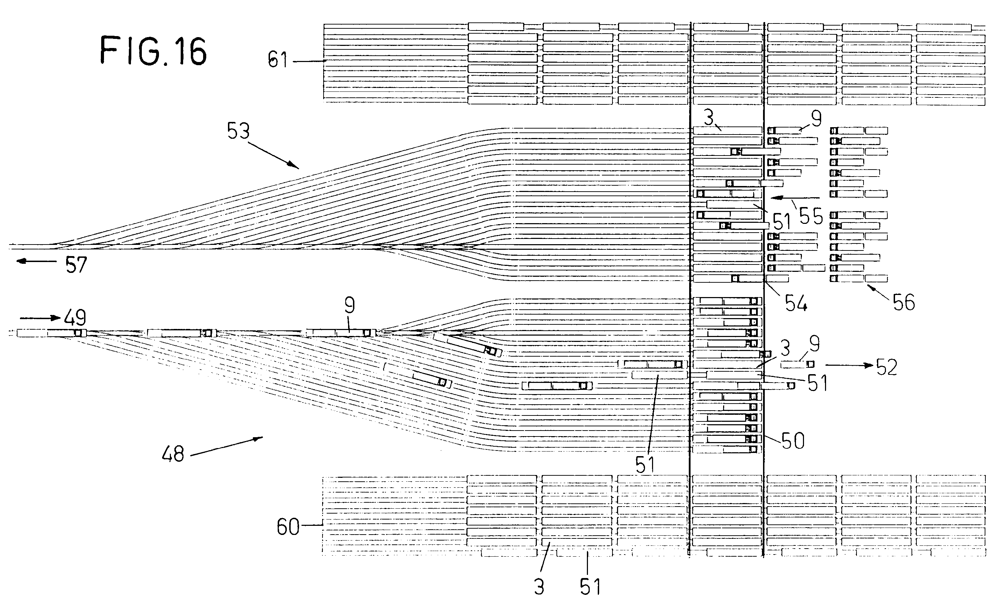

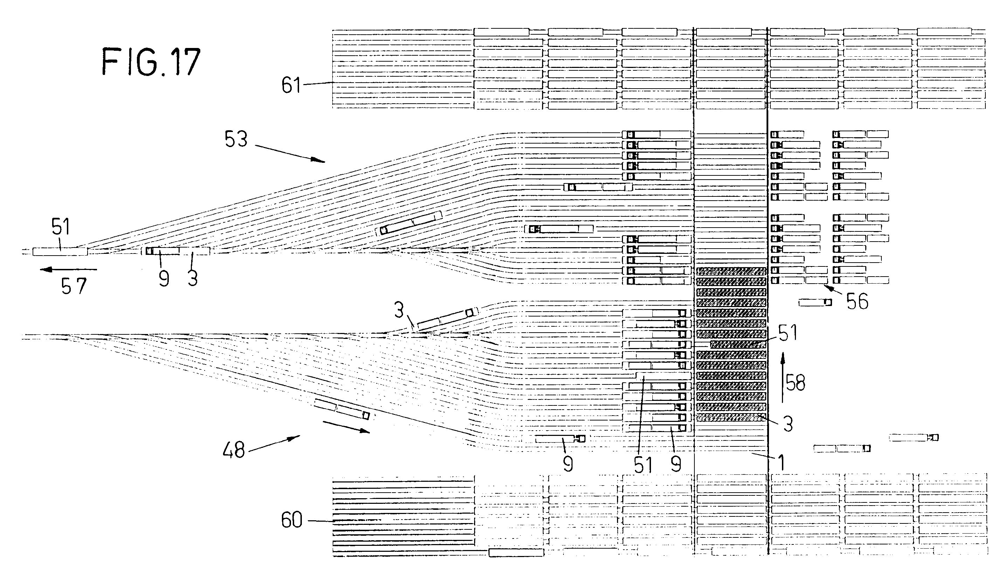

Die Fahrbahn 1 ist - sieht man von den nachstehend anhand der Fig. 16 und 17 noch näher erläuterten Stationsbereichen ab - innerhalb eines in Fig. 1 und 2 schematisch in Form einer Tunnelröhre veranschaulichten Tunnels 12 angebracht, der die Fahrbahn 1 sowie die Plattform 3 beim Transport gegen äußere Einflüsse, wie Schnee, Regen, Vereisung oder Verschmutzung, schützt. Selbstverständlich wäre es im Fall einer Strecke oder Teilstrecke, die nicht unterirdisch zu führen ist, auch möglich, die Fahrbahn 1 durch eine entsprechende Überdachung zu schützen, was aber in der Zeichnung der Einfachheit halber nicht näher veranschaulicht ist.

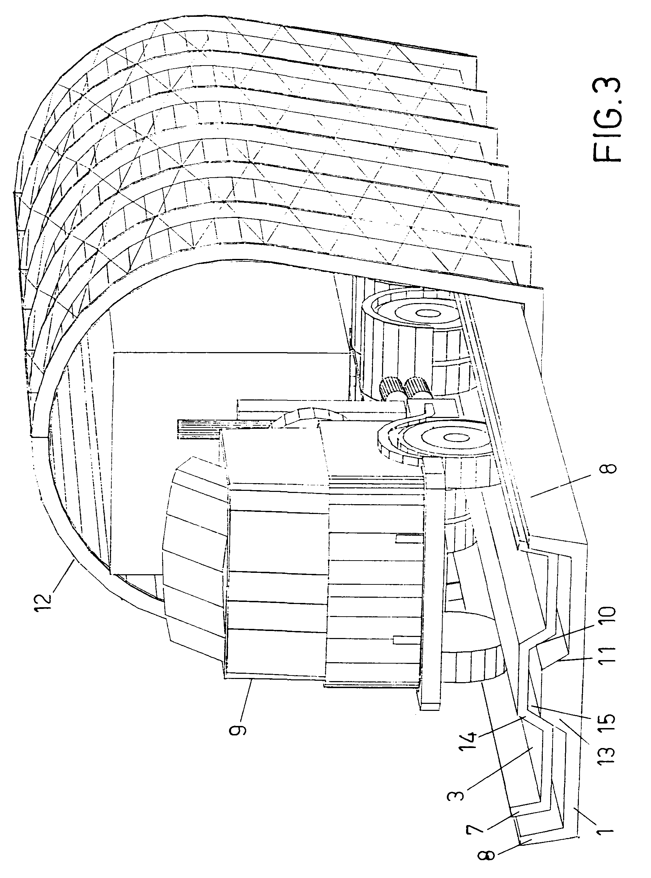

Die Fahrbahn oder Fahrschiene 1 kann auch im Vergleich zu Fig. 1 und 2 modifiziert werden, etwa wie in Fig. 3 und 4 veranschaulicht ist, wobei bei diesem Ausführungsbeispiel gemäß Fig. 3 und 4 die Fahrbahn 1 eine mittige, sich in Fahrtrichtung ersteckende, höckerartige, im Querschnitt beispielsweise trapezförmige Erhebung 13 hat, die mit ihren beiden Längsseiten die mechanische Seitenführungseinrichtung 11 für die oberhalb von ihr zu transportierenden Plattformen, z.B. die Plattform 3, bildet. In entsprechender Weise ist die Plattform 3, im Querschnitt gesehen, in ihrem mittleren Bereich mit einer Rinne in der Art einer Kröpfung 14 ausgebildet, so daß ein sich nach oben hin verengender, nach unten hin offener Kanal 15 entsteht, dessen Seitenwände die vorerwähnte mechanische Seitenführungseinrichtung 10 der Plattform 3 bilden. Nichtsdestoweniger ist auch bei der Ausführungsform gemäß Fig. 3 und 4, ähnlich wie bei jener gemäß Fig. 1 und 2, eine allgemein flache Ausbildung des Magnetschwebebahn-Fahrzeugs in Form einer Plattform 3 vorhanden, auf der die Lasten, insbesondere Lastkraftwagen 9, transportiert werden können. Die Länge der jeweiligen Plattform 3 ist dabei zweckmäßigerweise so bemessen, daß ein Lastkraftwagen 9 samt Anhänger mit den üblichen, längstmöglichen Abmessungen auf ihr Platz findet.

Im übrigen sind auch in Fig. 3 und 4 die Längsränder 7 bzw. 8 der Plattform 3 bzw. der Fahrbahn 1 hochgezogen dargestellt, und weiters ist wiederum ein Teil einer Tunnelkonstruktion 12 schematisch veranschaulicht. Magnetsysteme bzw. Linearantriebe, wie die in Fig. 1 und 2 bei 4 und 5 veranschaulichten Anordnungen, sind in Fig. 3 und 4 zwecks Vereinfachung und Übersichtlichkeit der Darstellung weggelassen worden.

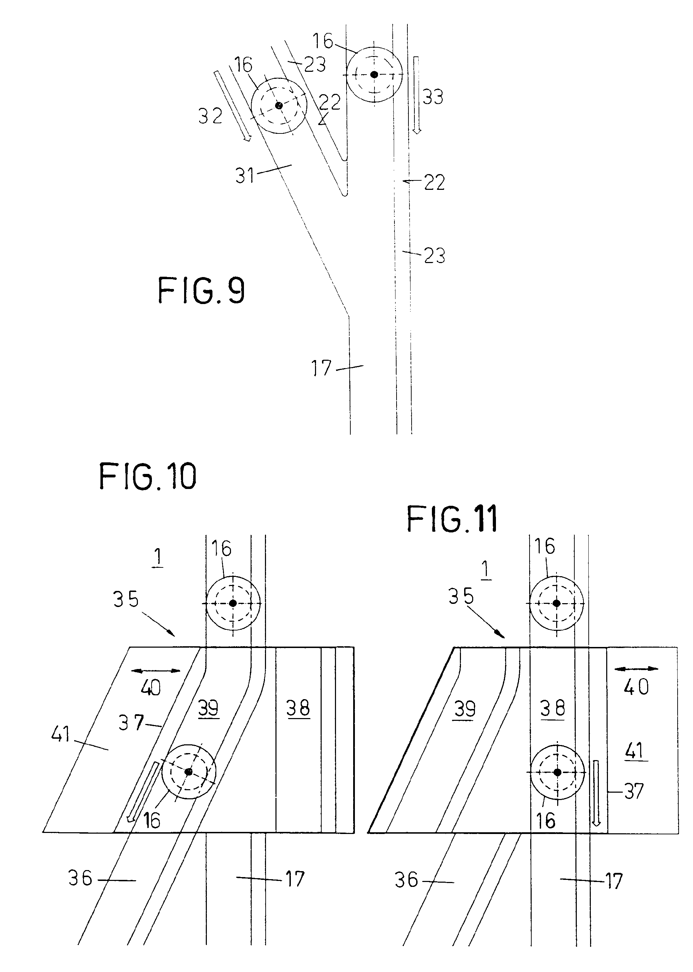

Im Hinblick auf vorteilhafte Rangiermöglichkeiten insbesondere in Stationsbereichen wird von den vorstehend beschriebenen Ausführungsbeispielen jenes gemäß Fig. 1 und 2 zumindest derzeit bevorzugt, da sich mit den dabei vorgesehenen mechanischen Seitenführungseinrichtungen 10, 11 in Form von Führungsrolleneinheiten 16 an der Plattform-Unterseite bzw. eines Führungskanals 17 in der Fahrbahn-Oberseite einfachere Möglichkeiten für die Seitenführung bei Fahrbahnverzweigungen und -zusammenführungen ergeben, wie nachstehend anhand der Fig. 9 bis 17 noch näher erläutert werden wird.

In den Fig. 5 bis 7 sind derartige Seitenführungseinrichtungen in Form einer Führungsrolleneinheit 16 an der Unterseite einer Plattform 3 sowie eines Führungskanals 17 in der Oberseite der Fahrbahn 1 mehr im Detail veranschaulicht. Die Fig. 5 und 7 zeigen dabei die Plattform 3 und die Führungsbahn 1 ausschnittsweise und nur ganz schematisch in einer Stirnansicht, um das Querschnittsprofil des Führungskanals 17 sowie die Ausbildung der Führungsrolleneinheit 16, die bevorzugt zwei koaxiale, um eine Achse 20 drehbare, übereinander angeordnete Führungsrollen 18, 19 enthält (in der schematischen Darstellung von Fig. 2 ist dagegen nur eine Rolle gezeigt), zu veranschaulichen; Fig. 5 zeigt dabei die Plattform 3 in ihrer (magnetisch) über der Fahrbahn 1 angehobenen Transportstellung, wogegen Fig. 7 die Plattform 3 in ihrer auf die Fahrbahn 1 abgesenkten Ruhestellung zeigt. Fig. 6 veranschaulicht sodann in einer Teildraufsicht gemäß der Linie A-A in Fig. 5 den Verlauf des Führungskanals 17 innerhalb der Fahrbahn 1. Dabei ist auch ersichtlich, daß die beiden Führungsrollen 18, 19 auf der gemeinsamen Achse 20 drehbar gelagert sind.

Weiters ist aus den Fig. 5 bis 7 erkennbar, daß die eine, in diesen Figuren linke Seitenwand 21 des Führungskanals 17 durchgehend vertikal und gerade verläuft, wobei die obere, einen größeren Durchmesser aufweisende Führungsrolle 18 an dieser linken Seitenwand 21 abrollt. Die gegenüberliegende, in der Zeichnung rechts dargestellte Seitenwand 22 des Führungskanals 17 ist ungefähr in der Mitte ihrer Höhe abgestuft, wie bei 23 veranschaulicht ist, und die untere, durchmesserkleinere Führungsrolle 19 steht mit dem unteren Teil 24 der rechten Seitenwand 22, im durch die Abstufung 23 bewirkten engeren unteren Teil des Führungskanals 17, in Eingriff. Die untere Führungsrolle 19 mit dem kleineren Durchmesser bleibt dabei während der Bewegung der Plattform 3 längs der Fahrbahn 1 in Abstand von der in der Zeichnung linken Seitenwand 21 des Führungskanals 17, wie aus Fig. 5 ersichtlich ist. In entsprechender Weise befindet sich die obere Führungsrolle 18 immer in seitlichem Abstand vom oberen Teil der rechten Seitenwand 22 des Führungskanals 17.

Die mechanischen Seitenführungseinrichtungen 10, 11, die beispielsweise durch die vorstehend erläuterten Führungsrolleneinheiten 16 - von denen pro Plattform 3 vorzugsweise zwei in Fahrtrichtung hintereinander vorgesehen sind, nämlich eine benachbart oder nahe dem vorderen Querrand 25 (Fig. 1) der Plattform 3 und eine benachbart oder nahe dem gegenüberliegenden hinteren Querrand (nicht dargestellt) der Plattform 3 - und den Führungskanal 17 gebildet sind, brauchen selbstverständlich nicht auf der gesamten Fahrtstrecke wirksam sein, da auf der freien Strecke in der Regel die Seitenführung durch beispielsweise das Magnetsystem 5 (Fig. 1 und 2) erzielt wird. Auf der freien Strecke wird vielmehr der Führungskanal 17 - der dort keine Führungsfunktion mehr hat - ausreichend verbreitert, so daß die Führungsrollen 18, 19 nicht mehr in Eingriff mit seinen Seitenwänden 21, 22 bzw. 24 stehen. Die mechanischen Seitenführungseinrichtungen 10, 11 treten jedoch in der Regel auf Langsamfahrabschnitten, insbesondere im Bereich von Stationen, in Funktion, vor allem um dann gegebenenfalls bei Fahrbahnverzweigungen auch mit Weichen zusammenzuarbeiten, wie nachstehend anhand der Fig. 10 bis 15 weiter erläutert werden wird.

In Fig. 8 ist in einer schematischen Draufsicht ähnlich jener gemäß Fig. 6 (also entsprechend der Linie A-A in Fig. 5) ein Abschnitt des Führungskanals 17 mit einer Bremseinrichtung für die Führungsrolleneinheiten 16 veranschaulicht. Mehr im einzelnen ist aus Fig. 8 ersichtlich, daß die beiden Seitenwände 21, 24 des Führungskanals 17 auf einem Teil ihrer Länge unterbrochen sind, d.h. es sind seitliche, nischenförmige Ausnehmungen, Hohlräume oder Unterbrechungen 26, 27 (letztere unterhalb des oberen Teils der rechten Seitenwand 22 des Führungskanals 17) vorgesehen, und in diesen Unterbrechungen 26, 27 sind keilförmige, an ihrem spitzen Ende um vertikale Achsen schwenkbar gelagerte Bremshebel 28, 29 vorgesehen, die in Ebenen entsprechend den Ebenen der beiden Führungsrollen 18, 19 gemäß Fig. 5, d.h. in verschiedenen Höhen, angeordnet und in die in Fig. 8 gezeigte Betriebslage entweder federnd vorgespannt (in Fig. 8 ist beispielsweise bei 30 eine derartige Feder schematisch angedeutet) oder mit Hilfe eines Stellantriebs (nicht gezeigt) schwenkbar sind, um entweder ein Abbremsen der Führungsrollen 18, 19 und damit der Plattform 3 während ihrer Bewegung längs des Führungskanals 17 entsprechend der auf die Bremshebel 26, 27 einwirkenden Federkraft oder ein Feststellen der Plattform 3 zu bewirken. Wie ersichtlich arbeitet dabei der obere, in der Zeichnung, Fig. 8, linke plattenförmige Bremshebel 28 mit der oberen Führungsrolle 18 und der untere, rechte Bremshebel 29 mit der unteren Führungsrolle 19 zusammen. Als Stellantrieb für die Bremshebel 28, 29 könnte beispielsweise ein elektrisch steuerbarer Hydraulik- oder Druckluftzylinder oder aber eine Elektromagnetanordnung eingesetzt werden, wie dies an sich herkömmlich ist und somit keiner weiteren Erläuterung bedarf.

Von Bedeutung ist hier weiters noch, daß die beiden Bremshebel 28, 29 in ihre zugehören Ausnehmungen 26, 27 derart hinein verschwenkt werden können, daß sie in dieser zurückgeschwenkten Lage mit ihren inneren, den Führungsrollen 18 bzw. 19 zugewandten Längsrändern eine Verlängerung der jeweiligen Seitenwand 21 bzw. 24 des Führungskanals 17 bilden, wobei dann die Führungsrolleneinheit 16 (und damit die zugehörige, in Fig. 8 nicht gezeigte Plattform 3) ungehindert passieren kann.

In Fig. 9 ist in einer ähnlichen schematischen Draufsicht wie in Fig. 6 oder Fig. 8 eine Zusammenführung von zwei Fahrbahnen bzw. Führungskanälen veranschaulicht, wobei im einzelnen die Einmündung eines Führungskanals 31 in einen geradeaus verlaufenden Führungskanal 17 gezeigt ist. Die beiden Führungskanäle 17, 31 sind dabei im Prinzip völlig gleich, und zwar wie vorstehend anhand der Fig. 5 bis 7 erläutert ausgebildet, und in ähnlicher Weise wie anhand dieser Fig. 5 bis 7 beschrieben wirken sie mit den an den Plattformunterseiten angebrachten Führungsrolleneinheiten 16 zwecks seitlicher Führung zusammen. Die Bewegungsrichtung dieser Führungsrolleneinheiten 16 ist in Fig. 9 mit Pfeilen 32 bzw. 33 veranschaulicht. Wie ersichtlich sind bei einer derarigen Zuammenführung von zwei Fahrbahnen zu einer einzigen unter einem spitzen Winkel keinerlei besondere Maßnahmen erforderlich, vielmehr kann der einmündende Führungskanal 31 einfach direkt in den anderen Führungskanal 17 hineinführen. Wichtig ist nur, daß die Seitenwand 22 des Führungskanals 17 bzw. 31 mit der Abstufung 23 immer auf der gleichen - z.B. rechten - Seite vorliegt. Der kurze Mündungsbereich, wo die jeweilige Führungsrolleneinheit 16 nicht auf beiden Seiten zugleich geführt ist, beeinträchtigt praktisch die Stabilität der Bewegungsführung der Plattformen nicht, vor allem wenn wie erwähnt zwei Führungsrolleneinheiten 16 pro Plattform 3 vorhanden sind.

In den Fig. 10 und 11 ist eine Ausführungsform einer mechanischen Weiche 35 veranschaulicht, die mit den Führungsrolleneinheiten 16 zusammenarbeitet, und die in Fig. 10 und 11 in ihren zwei Betriebsstellungen gezeigt ist; dabei leitet die Weiche 35 in der in Fig. 10 gezeigten Betriebsstellung die Führungsrolleneinheiten 16 in einen vom geradeaus verlaufenden Führungskanal 17 unter einem spitzen Winkel abzweigenden Führungskanal 36 hinein, wogegen die Weiche 35 in der Betriebsstellung gemäß Fig. 11 die Führungsrolleneinheiten 16 im geradeaus verlaufenden Führungskanal 17 weiterleitet.

Die Darstellungsweise in den Fig. 10 und 11 entspricht dabei wieder jener gemäß den Fig. 6, 8 oder 9, d.h. einer schematischen Draufsicht ungefähr entsprechend der Linie A-A in Fig. 5 (also in einer Ebene zwischen der Plattformunterseite und der Fahrbahnoberseite).

Mehr im einzelnen besteht die mechanische Weiche 35 gemäß Fig. 10 und 11 aus einem in Querrichtung hin- und herverschiebbaren, plattenförmigen, in Draufsicht trapezförmigen Bauteil 37, in dem zwei Führungskanalabschnitte 38 bzw. 39 vorgesehen sind, deren Querschnittsform ident zu jener des Führungskanals 17 oder 36 ist, vgl. beispielsweise Fig. 5. Die Hin- und Herverschiebbarkeit des plattenförmigen Bauteils 37 ist dabei mit den Doppelpfeilen 40 in Fig. 10 und 11 angedeutet. Der plattenförmige Bauteil 37 ist in einer in Draufsicht entsprechend trapezförmigen, jedoch breiteren Ausnehmung 41 in der Fahrbahn 1 untergebracht und geführt, und er ist mit Hilfe eines nicht näher veranschaulichten, an sich herkömmlichen und daher nicht näher zu erläuternden Stellantriebs, wie z.B. eines elektromechanischen Antriebs, eines Elektromagnetantriebs oder eines elektrisch angesteuerten Hydraulik- oder Druckluftzylinders, hin- und herverschiebbar. In der Betriebsstellung gemäß Fig. 10 stellt der Führungskanalabschnitt 39 eine Verbindung zwischen dem heranführenden Teil des Führungskanals 17 und dem abzweigenenden Führungskanal 36 her, wogegen in der Stellung der Weiche 35 gemäß Fig. 11 der geradeaus verlaufende Führungskanalabschnitt 38 im plattenförmigen Bauteil 37 eine Verbindung zum sich geradeaus weiter erstreckenden Führungskanal 17 herstellt.

Mit derartigen einfachen mechanischen Weichensystemen können die Plattformen 3, während sie durch elektromagnetische Kräfte angehoben und vorwärts bewegt werden, in der gewünschten Weise vor allem im Bereich von Stationen rangiert werden, wobei derartige Weichensysteme einfacher zu installieren und zu steuern sind als elektromagnetische Weichensysteme, wie etwa gemäß der DE-B-23 22 150, DE-C-707 032 oder der CH-A-563 267.

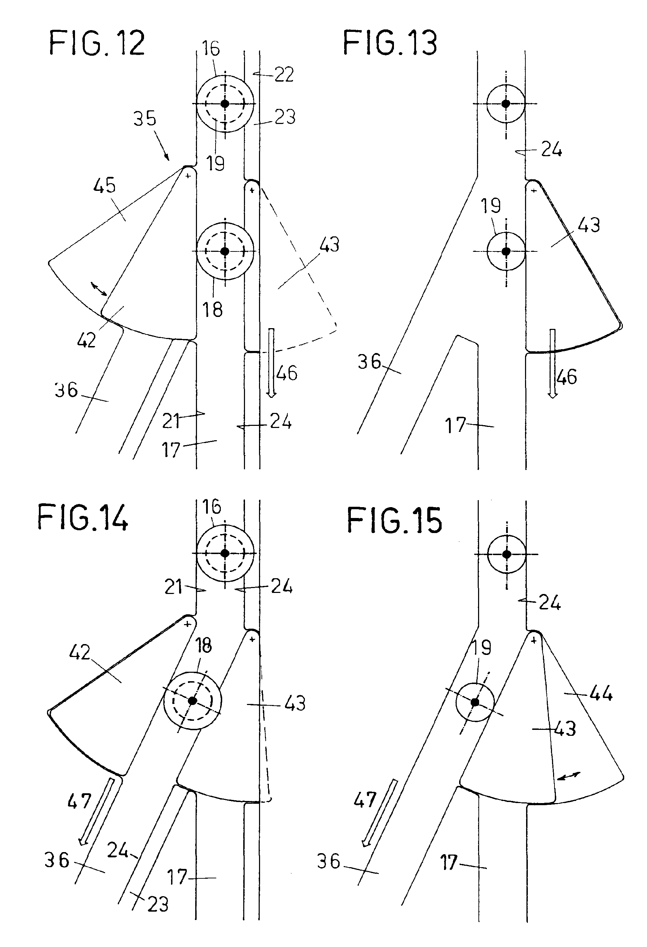

Dies gilt auch für die in den Fig. 12 bis 15 veranschaulichte Weichenkonstruktion, bei der anstelle eines einheitlichen plattenförmigen, querverschiebbaren Bauteils 37 zwei den verschiedenen Führungsrollen 18 bzw. 19 der jeweiligen Führungsrolleneinheit 16 zugeordnete, ähnlich den Bremshebeln gemäß Fig. 8 in Draufsicht dreieckförmig oder keilförmig ausgebildete, plattenförmige schwenkbare Bauteile 42, 43 vorgesehen sind. Ähnlich wie die Bremshebel gemäß Fig. 8 arbeiten dabei die Bauteile 42, 43 in verschiedenen Ebenen, um mit den verschiedenen Führungsrollen 18, 19 der jeweiligen Führungsrolleneinheit 16 zusammenzuwirken. Die Bauteile 42, 43 sind mit einem wiederum nicht näher veranschaulichten, an sich herkömmlichen Schwenk-Stellantrieb, beispielsweise in Form eines elektromagnetischen Antriebs oder eines elektrisch gesteuerten Druckluft- oder Hydraulikzylinders, synchron schwenkbar, so daß sie jeweils gemeinsam in der einen Betriebsstellung, gemäß Fig. 12 und 13, ein Geradeausführen der Führungsrolleneinheiten längs des geradeaus verlaufenden Führungskanals 17 und in der anderen Betriebsstellung, gemäß Fig. 14 und 15, ein Abzweigen der Führungsrolleneinheiten 16 in den vom geradeaus verlaufenden Führungskanal 17 abzweigenden Führungskanal 36 ermöglichen.

Es sei noch erwähnt, daß die Darstellung in den Fig. 12 und 14 jener gemäß den Fig. 6, 8, 9, 10 bzw. 11 entspricht, d.h. einer Ebene entsprechend der Linie A-A in Fig. 5 folgt, wogegen die Fig. 13 und 15 jeweils eine schematische Draufsicht bzw. genauer Schnittdarstellung etwa gemäß der Linie B-B in Fig. 5 veranschaulichen, um so das Zusammenarbeiten der unteren Führungrolle 19 mit dem ihr zugeordneten, tiefer angeordneten schwenkbaren Weichen-Bauteil 43 (Fig. 15) sowie dessen Zurückziehen in die zugehörige nischenförmige Ausnehmung 44 (Fig. 13) unterhalb des oberen Teils der Seitenwand 22 besser zu veranschaulichen.

Dem anderen, oberen schwenkbaren Weichen-Bauteil 42 ist in entsprechender Weise eine nach oben offene (gegebenenfalls auch abgedeckte) Aufnahmeausnehmung 45 zugeordnet.

Wie aus den Fig. 12 bis 15 ersichtlich ist, definieren die Bauteile 42, 43 mit ihren einander zugewandten Längsrändern in der jeweiligen Betriebsstellung Führungskanal-Abschnitte, um ein glattes, stoßfreies Leiten der Führungsrolleneinheiten 16 in den jeweiligen Führungskanal 17 bzw. 36 sicherzustellen.

Die Bewegungsrichtung der Plattformen 3 ist weiters in den Fig. 12 und 13 mit einem Pfeil 46 und in Fig. 14 und 15 mit einem Pfeil 47 veranschaulicht.

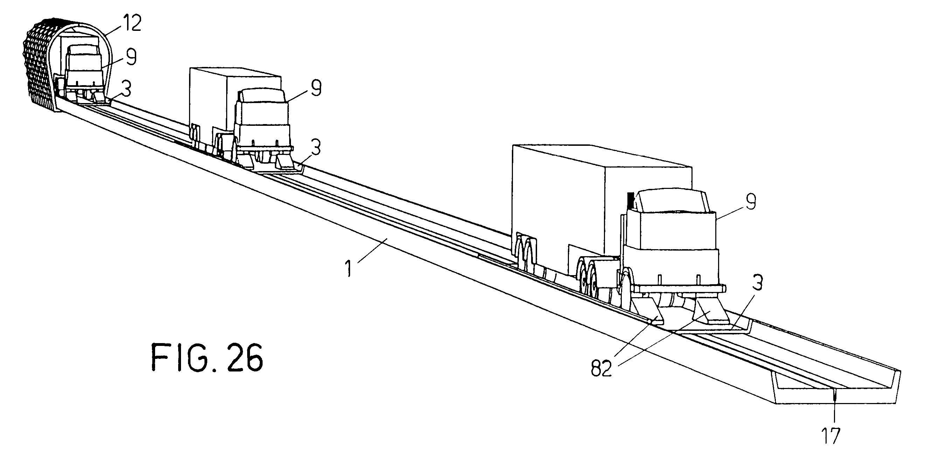

Wenn vorstehend bevorzugte Ausführungsbeispiele für die Plattformen, Seitenführungseinrichtungen, Fahrbahnen, Bremseinrichtungen, Zusammenführungen und Verzweigungen sowie Weichenkonstruktionen hiefür erläutert wurden, so sind doch selbstverständlich weitere Abwandlungen und Modifikationen möglich. Beispielsweise ist es denkbar, bei der in Fig. 1 und 2 veranschaulichten Ansbildung der Plattform 3 mit dem durchgehend ebenen Boden 6 an der Oberseite einen im Querschnitt trapezförmigen Längsvorsprung ähnlich dem, wie er durch die Kröpfung 14 gemäß Fig. 3 und 4 erhalten wird, vorzusehen, um so eine zusätzliche seitliche Stabilisierungs- und Führungseinrichtung für auf der Plattform 3 zu transportierende Kraftfahrzeuge 9 zu erhalten. Ein solcher Längsvorsprung ist in Fig. 1 schematisch mit gestrichelten Linien bei 34 veranschaulicht. Weiters sei erwähnt, daß im Bereich von Zusammenführungen oder Verzweigungen die hochgezogenen Längsränder 8 der Fahrbahnen 1 wegfallen, wobei in diesen Langsam-Fahrbereichen wie erwähnt eine Seitenführung anstatt durch ein Magnetsystem durch die beschriebenen mechanischen Seitenführungseinrichtungen 10, 11, insbesondere mit Führungsrolleneinheiten 16 und Führungskanal 17, bewerkstelligt wird. Selbstverständlich können ferner auf den Plattformen 3 herkömmliche Keile oder Bremsklötze (82 in Fig. 26) verwendet werden, um die Lastkraftwagen 9 in Längsrichtung auf den Plattformen 3 zu sichern.

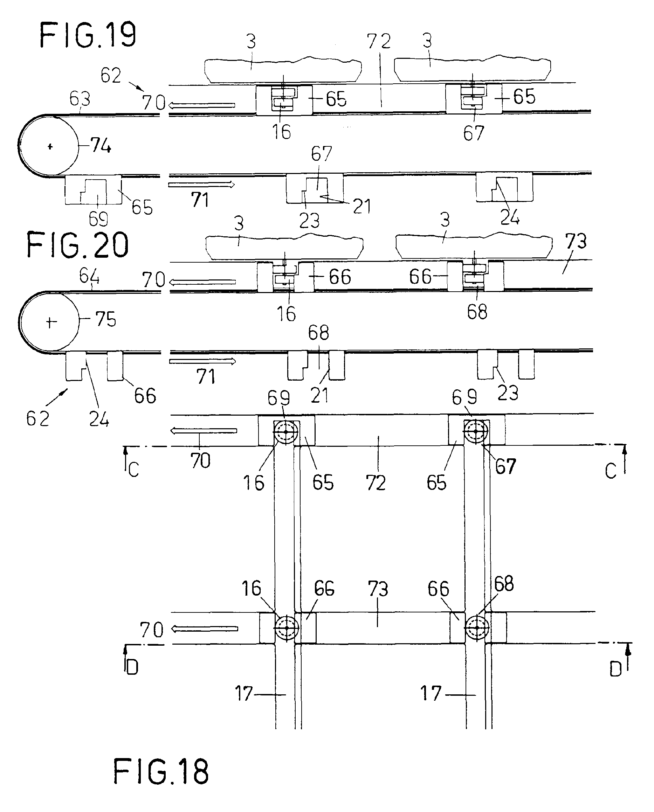

Mit den vorstehend beschriebenen Führungseinrichtungen, Zusammenführungen und Verzweigungen bzw. Weichen können nun für das vorliegende Transportsystem die Ankunfts- und Abfahrtsbereiche von Stationen aufgebaut werden, wobei, um die flachen Plattformen 3 vom Ankunftsbereich der jeweilige Station zum Abfahrtsbereich zurückzubringen, eine nachstehend anhand der Fig. 18 bis 23 noch näher erläuterte Querverschubeinrichtung vorgesehen wird. In Fig. 16 und 17 ist schematisch in einer Draufsicht eine solche Station mit Ankunfts- und Abfahrtsbereich in verschiedenen Phasen des Betriebs veranschaulicht.

Mehr im Detail zeigt Fig. 16, wie im Ankunftsbereich 48 der Station einerseits Plattformen 3 mit darauf befindlichen Kraftfahrzeugen, insbesondere Lastkraftwagen (LKW's) 9, längs einer Fahrbahn 1 in Richtung gemäß Pfeil 49 herantransportiert und auf beispielsweise 14+1 Fahrbahnen über Weichensysteme etwa gemäß Fig. 12 bis 15 oder Fig. 10 und 11 aufgeteilt werden. In einem Entlade"dock" 50 erfolgt eine mehr oder weniger parallele Entladung der Plattformen 3, d.h. die LKW's 9 fahren von den dort angekommenen, direkt auf den Fahrbahnen aufliegenden Plattformen 3 ab. Da beim vorliegenden Transportsystem daran gedacht ist, die LKW's 9 auf den Plattformen 3 über die Fahrstrecken (durch den jeweiligen Tunnel) unbemannt zu transportieren, wird ein eigener Waggon oder eine Personenkabine 51 auf einer Plattform 3 pro Gruppe von z.B. vierzehn Plattformen 3 mit LKW's 9 bereitgestellt, um die Fahrer während des Transports der LKW's 9 im Verband aufzunehmen. In diesem Waggon 51 - der im Entladedock 50 auf der mittleren Fahrbahn ankommt, um die Wege für die Fahrer von der Personenkabine oder dem Waggon 51 zu den LKW's 9 insgesamt möglichst kurz zu halten - kann eine eigene Luftversorgung und eine Klimaanlage (ähnlich wie in einem Flugzeug) vorhanden sein; dementsprechend kann sich andererseits eine aufwendige Belüftung des Tunnels, durch den die - unbemannten - LKW's 9 im Verband transportiert werden, erübrigen.

In Fig. 16 ist im Entladedock 50 gerade jene Situation veranschaulicht, in der sich die ersten LKW's 9 von den Plattformen 3 entfernen, während bereits sieben LKW's der nächsten Gruppe herankommen sowie die dieser neuen Gruppe zugehörige Personenkabine 51 (die in der jeweiligen Gruppe oder im jeweiligen Verband an erster Stelle transportiert wird) bereits wartet, um in die Entladeposition im Entladedock 50 eingelassen zu werden. Die Richtung der vom Entladedock 50 abfahrenden LKW's 9 ist dabei in Fig. 16 mit dem Pfeil 52 angedeutet.

Mit 53 ist sodann in Fig. 16 und 17 der Abfahrtsbereich der Station angegeben. In Fig. 16 ist im Abfahrtsbereich 53 jene Phase im Betrieb veranschaulicht, in der LKW's 9 auf die im neben dem Entladedock 50 befindlichen Verladedock 54 bereitstehenden Plattformen 3 auffahren, vgl. auch Pfeil 55. Eine zweite Gruppe 56 von LKW's 9 steht bereits bereit für den nächsten Verladevorgang. Nach Auffahren der LKW's 9 auf die im Verladedock 54 vorhandenen Plattformen 3 begeben sich die Fahrer von ihren LKW's 9 zu der auf der mittigen Fahrbahn im Verladedock 54 befindlichen Personenkabine 51, die sodann als erste beim folgenden Transport im Verband das Verladedock 54 verläßt und schwebend in Abfahrtsrichtung (Pfeil 57 in Fig. 16 und 17) den Stationsbereich verläßt. Ihr folgen nacheinander die benachbarten Plattformen 3 mit den darauf abgestellten LKW's, und diese Phase im Betrieb ist in Fig. 17 dargestellt. Aus Fig. 17 ist dabei auch ersichtlich, daß zur Beschleunigung des Betriebs vor Beginn des Abtransports der Gruppe von bereits beladenen Plattformen 3 diese gesamte Gruppe zunächst vom eigentlichen Verladedock 54 eine Strecke vorwärts transportiert werden kann, um so das Verladedock 54 für den nächsten Vorgang als Vorbereitung zum nächsten Beladen frei zu bekommen.

Bei diesem Vorgang handelt es sich darum, die nunmehr leeren Plattformen 3 aus dem Entladedock 50 in Querrichtung, vgl. Pfeil 58 in Fig. 17, zum Verladedock 54 zu verschieben. Zur besseren Veranschaulichung sind dabei in Fig. 17 die querverschobenen Plattformen 3, obwohl es sich hier um eine Draufsicht handelt, mit einer Schraffur versehen, um die Plattformen 3 so besonders hervorzuheben. Deutlich ist ersichtlich, daß der gesamte Verband von Plattformen 3 samt in der Mitte befindlicher Personenkabine 51 in Querrichtung vom Entladedock 50 zum Verladedock 54 verschoben wird, wobei in der Situation gemäß Fig. 17 dieser Querverschub um bereits drei Fahrbahnen 1 oder dementsprechend Führungskanäle erfolgt ist. Vor dem eigentlichen Entladedock 50 warten sodann in der Situation gemäß Fig. 17 bereits die ersten LKW's 9 sowie die zugehörige Personenkabine 51 der mittlerweile angekommenen nächsten Gruppe 59, deren letzte drei Plattformen 3 mit LKW's 9 gerade das letzte Stück herantranportiert werden.

Der Vollständigkeit halber sei zu Fig. 16 und 17 noch darauf hingewiesen, daß seitlich des Ankunftsbereichs 48 bzw. Abfahrtsbereichs 53 Lagerbereiche 60, 61 für Plattformen 3 und Personenkabinen 51 vorhanden sein können, um so einerseits ein Ersatzlager zu haben und andererseits je nach Länge der Strecken, über die die LKW's 9 zu transportieren sind, bei Bedarf mehr Gruppen oder Verbände zu je vierzehn plus einer Plattformen (oder auch, bei entsprechend größeren Ent- und Verladedocks, mit mehr Plattformen) hintereinander transportieren zu können.

Anhand der Fig. 18 bis 23 soll nun eine bevorzugte Ausführungsform einer Querverschubeinrichtung 62 zum Verschieben der Plattformen 3 entsprechend der Querrichtung 58 (Fig. 17) vom Entladedock zum Verladedock näher erläutert werden. Diese Querverschubeinrichtung 62 kann sich dabei gemäß der Darstellung in Fig. 16 und 17 quer über die gesamte Breite der Station, einschließlich der Lagerbereiche 60 und 61, erstrecken, um so gegebenenfalls auch Plattformen von diesen Lagerbereichen 60, 61 zum Verladedock 54 überstellen zu können. In diesem Zusammenhang ist es auch zweckmäßig, wenn die Querverschubeinrichtung 62 derart ausgebildet ist, daß sie in beiden Richtungen, also in Richtung den Pfeiles 58 in Fig. 17 ebenso wie in der entgegengesetzten Richtung, die Plattformen 3 quer verschieben kann. Dies kann beispielsweise mit einer Querverschubeinrichtung 62 mit einem Transportförderer in Form eines Endlosförderers 63, 64, wie in den Fig. 18 bis 23 veranschaulicht, problemlos realisiert werden.

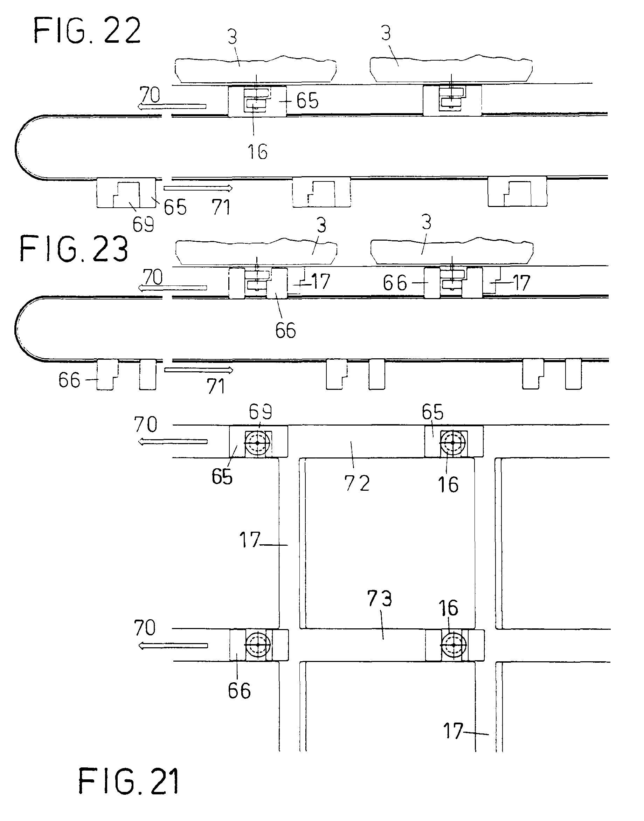

Mehr im einzelnen weist die vorliegenden Querverschubeinrichtung 62 im Hinblick darauf, daß bevorzugt je Plattform 3 zwei Führungsrolleneinheiten 16 vorhanden sind, in entsprechender Weise auch zwei zueinander parallele Endlosförderer 63 und 64 (Fig. 19 und 20; in Fig. 18 nicht gezeigt) auf. Jeder Endlosförderer 63, 64 trägt Mitnehmer 65 bzw. 66, die Führungskanalabschnitt-ähnliche Aufnahmen 67 bzw. 68 für die Führungsrolleneinheiten 16 der Plattformen 3 besitzen. Die Mitnehmer 65 des im Verlade- bzw. Entladedock endseitigen Endlosförderers 63 (s. Fig. 19 bzw. oberer Teil der Fig. 18 und in entsprechender Weise Fig. 22 bzw. oberer Teil der Fig. 21) können, da dort eine Weiterbewegung der Plattformen 3 mit ihren Führungsrolleneinheiten 16 nicht mehr erfolgt, durch eine stirnseitige Endwand 69 abgeschlossen sein, wobei diese Endwand 69 zugleich als Anschlag für die Führungsrolleneinheiten 16 in der End- bzw. Beladestellung der Plattformen 3 dienen kann. Die Mitnehmer 66 des vorderen Endlosförderers 64 müssen dagegen ein Hindurchbewegen der einen Führungsrolleneinheit 16 gestatten.

Zu erwähnen ist noch, daß die Darstellung in Fig. 18 und 21 wiederum eine ganz schematische Draufsicht ähnlich jener gemäß Fig. 6 ist, wobei der Bereich von zwei benachbarten Führungskanälen 17 im Entladedock 50 als Beispiel veranschaulicht ist. In Fig. 18 und dementsprechend auch in Fig. 19 und 20, die ganz schematische Schnittdarstellungen entsprechend den Linien C-C bzw. D-D in Fig. 18 zeigen, ist dabei jene Phase gezeigt, in der sich die Führungsrolleneinheiten 16 von zwei Plattformen 3 noch in Ausrichtung zu den zugehörigen Führungskanälen 17 befinden. Wenn nun die Endlosförderer 63, 64 gemäß der Darstellung in Fig. 19 und 20 im Gegenuhrzeigersinn (s. die Pfeile 70 und 71) angetrieben werden, so bewegen sich die Mitnehmer 65, 66 am oberen Trum der Endlosförderer 63, 64 gemäß der Darstellung in Fig. 18 bis 23 nach links, und zwar in hiefür im Fahrbahn-Bereich vorgesehenen Querkanälen 72, 73, die im rechten Winkel zu den Führungskanälen 17 verlaufen. Im Boden dieser Querkanäle 72, 73 sind auch die Endlosförderer 63, 64 sowie die zugehörigen Antriebseinrichtungen und -räder, wie etwa Umlenk- oder Antriebsräder 74, 75 (Fig. 19 und 20), untergebracht. Dabei kann es sich bei den Endlosfördern 63, 64 beispielsweise um Kettenförderer handeln, die durch die als Kettenräder ausgebildeten Antriebsräder 74, 75 synchron, etwa dadurch, daß diese beiden Kettenräder auf einer gemeinsamen Welle sitzen, angetrieben werden.

In Fig. 21 bis 23 ist jene Situation im Betrieb der Querverschubeinrichtung 62 veranschaulicht, in der die Mitnehmer 65, 66 die Führungsrolleneinheiten 16 der Plattformen 3 aus der Lage in Ausrichtung zu den Führungskanälen 17 (s. Fig. 18-20) heraus und - gemäß Darstellung in diesen Figuren - nach links bewegt haben.

Zur Vereinfachung der Zeichnungsdarstellung sind weiters die Kettenräder 74, 75 in Fig. 22 und 23 weggelassen worden.

Selbstverständlich sind die Mitnehmer 65, 66 auf ihrem jeweiligen Endlosförderer 63 bzw. 64 in Abständen entsprechend den Abständen der Führungskanäle 17 voneinander angeordnet, um so die vorstehend beschriebene Arbeitsweise zu ermöglichen. Im Betrieb können in an sich herkömmlicher Weise sodann an sich bekannte Endschalter bzw. Mikroschalter dafür sorgen, daß ein Stillstand der Endlosförderer 63, 64 in einer solchen Lage erfolgt, in der die Mitnehmer 65, 66 wiederum genau mit ihren Führungskanalabschnitten zum jeweiligen Führungskanal 17 ausgerichtet sind. Danach kann beim nachfolgenden Magnetschwebetransport der Plattformen 3 die jeweilige Führungsrolleneinheit 16 problemlos wieder in den zugeordneten Führungskanal 17 eintreten, wenn der nächste Abtransport von LKW's etwa wie anhand der Fig. 16 und 17 erläutert begonnen wird.

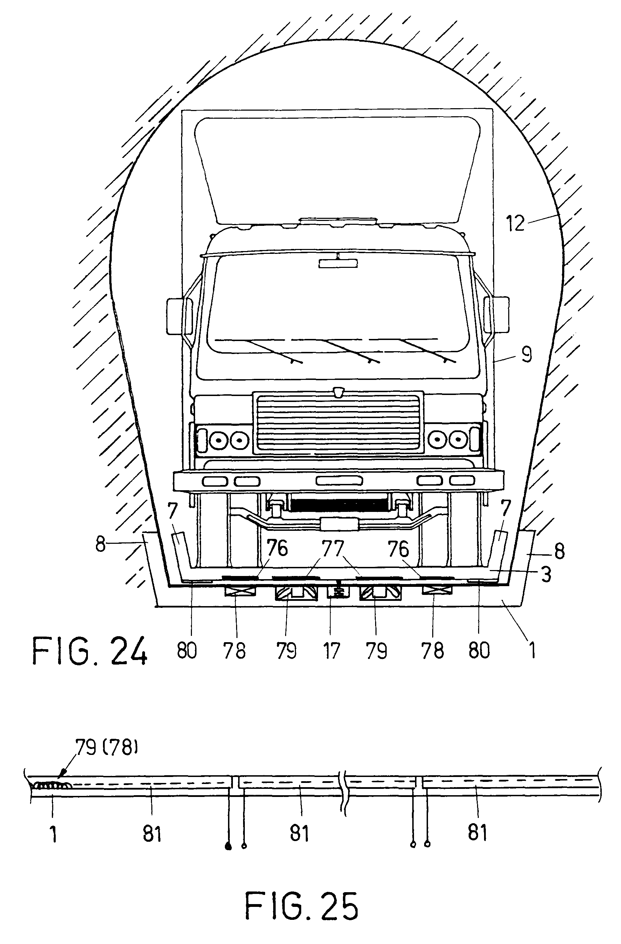

Wie bereits erwähnt kann bei der Realisierung des vorstehend erläuterten Transportsystems auf bekannte Techniken hinsichtlich der Magnetsysteme und des Linearantriebs zurückgegriffen werden. Beim vorliegenden Transportsystem ergibt sich jedoch insofern eine Besonderheit, als die Plattformen 3 - bei ausreichender Stabilität - möglichst flach und dabei auch möglichst leichtgewichtig ausgebildet sein sollen. Dabei ergibt sich das Problem, diese Magnetschwebe-Fahrzeuge in Form von Plattformen möglichst frei von zusätzlichen Aggregaten, wie für die Energieversorgung, freizuhalten. In den Fig. 24 und 25 ist nun schematisch, gegenüber Fig. 1 und 2 jedoch mehr im Detail das bevorzugte Transportsystem veranschaulicht, das der vorstehenden Problematik insofern Rechnung trägt, als die Plattform 3 keinerlei elektromagnetische Einrichtungen für das Anheben, den Vortrieb oder die Führung trägt, sondern nur mit derartigen in der Fahrbahn 1 untergebrachten Einrichtungen zusammenwirkende Permanentmagnetbereiche aufweist.

An sich kann dabei die Plattform 3 insgesamt aus permanentmagnetischem oder ferromagnetischem Material sein, bevorzugt wird jedoch derzeit eine Ausbildung, bei der an der Unterseite der Plattform 3 in Streifenform vorgesehene permanentmagnetische Reaktionsplatten 76 bzw. 77 vorgesehen sind, die mit zugehörigen Elektromagnetanordnungen 78 sowie Induktionsantriebseinrichtungen, d.h. Linearmotoreinrichtungen 79 zusammenwirken, die an der Oberseite der Fahrbahn 1 in diese eingelassen sind. Dabei können beispielsweise die Elektromagnetsysteme 78, 76 sowohl zum Heben der Plattformen 3 samt den auf ihnen befindlichen Kraftfahrzeuge, wie LKW's 9, als auch zur seitlichen Führung beim Transport ausgebildet sein. Andererseits kann in Abweichen von der in Fig. 24 gezeigten symmetrischen Anordnung von Linearmotoren 79 nahe dem Mittenbereich der Plattform 3 bzw. Fahrbahn 1 eine Ausbildung vorgesehen werden, bei der diese Linearmotoren 79 in den seitlich hochgezogenen Längsrändern 8 der Fahrbahn 1 untergebracht sind, wobei die zugehörigen Reakionsplatten 77 in den Längsrändern 7 der Plattformen 3 unterzubringen wären.

In Fig. 24 sind sodann noch schematisch an der Unterseite der Plattform 3 Bremsbeläge oder Bremskufen 80 gezeigt, mit denen die Plattformen 3 auf der Fahrbahnoberseite aufliegen können, wobei sie mit einem unteren Friktionsbelag versehen sind, so daß etwa im Fall, daß die Energieversorgung während des Transports unterbrochen wird, die Plattformen 3 mit den darauf befindlichen LKW's 9, wenn sie auf die Fahrbahn 1 aufsetzen, möglichst rasch bis zu einem Stillstand abgebremst werden.

Die in der Fahrbahn 1 untergebrachten Einrichtungen 78, 79 sowie der Führungskanal 17 sind wirksam gegen äußere Einflüsse dadurch geschützt, daß für die Unterbringung die Tunnelkonstruktion 12 vorgesehen ist.

Bei längeren Strecken ist es unzweckmäßig, die elektromagnetischen Einrichtungen bzw. Linearantriebseinrichtungen 78, 79 dauernd über die gesamte Streckenlänge mit Energie zu versorgen, wenn nur auf einem kurzen Abschnitt der Strecke jeweils eine Plattform 3 transportiert wird. Demgemäß ist es zweckmäßig, diese elektrisch zu aktivierenden Einrichtungen 78 bzw. 79 der Länge nach, d.h. in Fahrtrichtung, in einzelne, unabhängig voneinander anzusteuernde und zu speisende Abschnitte 81 zu unterteilen, wie dies in Fig. 25 nur ganz schematisch in einem Ausschnitt einer Längsansicht der Fahrbahn 1 angedeutet ist. Die Länge dieser Abschnite 81 kann dabei an die Länge der Plattformen 3 oder aber an die Länge eines Schwebeverbandes von beispielsweise 14+1 Plattformen 3, wie vorstehend erwähnt, angepaßt werden, so daß jeweils Abschnitte entsprechend einer Plattform 3 oder aber eines Schwebeverbandes vorliegen und aktiviert werden. Zweckmäßigerweise werden dabei immer zwei benachbarte Abschnitte 81 aktiviert, wobei jeweils beim Abschalten des hinteren, von der Plattform 3 oder der Gruppe breits überfahrenen Abschnitts 81 der nächstfolgende Abschnitt 81, zu dem die Plattform 3 oder Plattformgruppe nun kommt, aktiviert wird. Beim Transport von mehreren Plattformgruppen hintereinander, wobei zwischen den einzelnen Gruppen ein größerer Sicherheitsabstand einzuhalten ist, können dann auch mehrere Abschnitte 81 bzw. Gruppen von Abschnitten 81 in Abständen voneinander sukzessive aktiviert bzw. abgeschaltet werden. Die Schaltfolge bzw. Aktivierungsfolge hängt dabei von der gewünschten Transportgeschwindigkeit ab.

Andererseits ist es aus Gründen einer besonders rationellen, energiesparenden Betriebsweise auch günstig, wenn die einzelnen Abschnitte 81 eine Länge gleich einem Teil, z.B. 1/4, der Plattformlänge haben, wobei im Betrieb gerade immer so viele Abschnitte 81 hintereinander aktiviert werden, daß ihre Gesamtlänge der Plattformlänge entspricht bzw. diese etwas überschreitet. Im genannten Beispiel (die Abschnittlänge beträgt 1/4 der Plattformlänge) wären somit gleichzeitig immer vier oder fünf unmittelbar aufeinanderfolgende Abschnitte 81 anzusteuern, wobei dann im Betrieb laufend der in Fahrtrichtung nächste Abschnitt 81 aktiviert, der letzte, bereits von der Plattform 3 überfahrene Abschnitt 81 hingegen abgeschaltet wird.

In Fig. 26 ist schließlich zur Vervollständigung ein Teil eines Schwebeverbandes von Plattformen 3 mit darauf befindlichen LKW's 9 schaubildlich veranschaulicht, wobei überdies ein Teil der Tunnelkonstruktion 12 sowie schematisch herausgezeichnet eine Fahrbahn 1 mit einem Führungskanal 17 gezeigt sind. Aus Fig. 26 ist dabei auch ersichtlich, wie die LKW's 9 auf den Plattformen 3 mit Hilfe vom Prellböcken oder Bremsklötzen 82 gesichert werden können.

Abschließend soll das vorliegende Transportsystem anhand eines Zahlenbeispiels mit seinen Vorzügen noch weiter erläutert werden. Angenommen wird, daß eine Tunnelstrecke von 90 km errichtet wird, wobei im Tunnel zwei Tunnelröhren 12, für die beiden Fahrtrichtungen, vorgesehen werden. Diese Tunnelröhren können ganz eng an die maximalen Abmessungen von LKW's 9 angepaßt werden, und sie brauchen wie bereits erwähnt nicht belüftet werden, da die Personenkabine 51 eine eigene Luftversorgung besitzt. Beispielsweise können die Tunnelröhren einen Durchmesser von 5 m haben. Wenn nun angenommen wird, daß die Transportgeschwindigkeit der Plattformen 3 mit den darauf befindlichen LKW's 9 ungefähr 60 km/h beträgt, so ergibt sich eine Gesamttransportzeit von ca. 1,5 h. Bei der vorstehend beschriebenen Einteilung in Gruppen zu je vierzehn Plattformen 3 mit LKW's 9 plus einem Personenwaggon 51 ist es möglich, alle fünf Minuten einen derartigen Schwebeverband oder Gruppe zu starten, wobei sich ein Sicherheitsabstand zwischen den einzelnen Gruppen von ungefähr 5 km ergibt. Andererseits reichen die erwähnten fünf Minuten aus, um die jeweils vierzehn LKW's pro Gruppe auf die Plattformen zu bringen bzw. von den Plattformen abzufahren, wobei auch die Zeit für den Weg der Fahrer von den LKW's zur Personenkabine bzw. zurück mit einkalkuliert ist. Insgesamt könnten bei den voranstehend angegebenen Zahlen pro Tag (24 h) in einer Fahrtrichtung durch den Tunnel knapp sechseinhalbtausend LKW's transportiert werden, eine Zahl, die größer ist als die derzeitige Zahl von LKW's im Transitverkehr durch Tirol (ca. 4000). Die vorstehend angegebene Tunnellänge von 90 km würde dabei einer Tunnelstrecke für eine Untertunnelung von Tirol entsprechen, so daß sich aus dem vorstehenden Zahlenbeispiel letztlich ergibt, daß bei einem um die Hälfte gesteigerten Transitverkehrsaufkommen dennoch ein Transit von LKW's mit dem vorliegenden Transportsystem in viel kürzerer Zeit, nämlich in eineinhalb Stunden anstatt vier oder mehr Stunden, ermöglicht würde.

## Patentansprüche

1. Magnetschwebebahn-Transportsystem für Kraftfahrzeuge, insbesondere Lastkraftwagen (9), mit wenigstens einer, wenigstens eine im wesentlichen flach ausgebildete Magnetschwebe-Plattform (3) mittels eines Magnetsystems (4, 5) tragenden und führenden Fahrbahn (1), die zumindest auf einem wesentlichen Teil ihrer Länge überdacht, z.B. in einer Tunnelröhre angeordnet ist, wobei an der Oberseite der Fahrbahn (1) und Unterseite der Magnetschwebe-Plattform (3) auf bestimmten Abschnitten der Fahrbahn (1) im Normalbetrieb miteinander zusammenarbeitende Seitenführungseinrichtungen (10, 11) vorgesehen sind, dadurch gekennzeichnet, daß die Seitenführungseinrichtungen mechanische Seitenführungseinrichtungen (10, 11) sind, und daß in einer Station nebeneinander ein Ankunfts- bzw. Entladebereich (48) und ein Abfahrts- bzw. Beladebereich (53) vorgesehen sind und den Plattformen (3) eine Querverschubeinrichtung (62) zu ihrer Verschiebung allgemein quer zur Fahrtrichtung zwischen dem Ankunfts- bzw. Entladebereich (48) der Station und dem Abfahrts- bzw. Beladebereich (53) der Station zugeordnet ist.

2. Transportsystem nach Anspruch 1, dadurch gekennzeichnet, daß die Fahrbahn (1) eine im allgemeinen ebene Oberseite und die oberhalb davon geführte Plattform (3) eine im allgemeinen ebene Unterseite aufweist.

3. Transportsystem nach Anspruch 1 oder 2, dadurch gekennzeichnet, daß in der Fahrbahn-Oberseite ein Führungskanal (17; 31; 36) eingelassen ist und an der Plattform-Unterseite wenigstens eine Führungsrolleneinheit (16) mit wenigstens einer um eine vertikale Achse (20) drehbaren, in den Führungskanal eingreifenden Führungsrolle (18, 19) angebracht ist.

4. Transportsystem nach Anspruch 3, dadurch gekennzeichnet, daß in der bzw. jeder Führungsrolleneinheit zwei Führungsrollen (18, 19) übereinander vorgesehen sind, von denen jeweils eine an einer der beiden Längsseitenwände (21, 22) des Führungskanals (17; 31; 36) geführt ist.

5. Transportsystem nach Anspruch 4, dadurch gekennzeichnet, daß die beiden Führungsrollen (18, 19) koaxial angeordnet sind und verschieden große Durchmesser haben, und zumindest eine Längsseitenwand (22) des Führungskanals abgestuft (23) ausgebildet ist, wobei die eine, durchmesserkleinere Führungsrolle (19) im durch die Stufe (23) bewirkten engeren Teil des Führungskanals (17) an dessen abgestufter Längsseitenwand (24) und die andere, durchmessergrößere Führungsrolle (18) an der gegenüberliegenden Längsseitenwand (21) des Führungskanals (17) anliegt.

6. Transportsystem nach einem der Ansprüche 3 bis 5, dadurch gekennzeichnet, daß bei Fahrbahn-Zusammenführungen ein Führungskanal (31) direkt in den anderen (17) einmündet.

7. Transportsystem nach einem der Ansprüche 3 bis 5, dadurch gekennzeichnet, daß bei Fahrbahn-Verzweigungen mechanische Weichen (35) mit seitlich bewegbaren Führungskanal-Seitenwandteilen vorgesehen sind.

8. Transportsystem nach Anspruch 7, dadurch gekennzeichnet, daß in der Fahrbahn im Bereich der Verzweigung zumindest ein schwenkbarer Bauteil mit einem oder mehreren Führungskanal-Seitenwandteilen untergebracht ist, der bzw. die in jeder von zwei Schwenklagen eine Verbindung zu einem von zwei nachfolgenden, auseinanderführenden Führungskanälen bildet bzw. bilden.

9. Transportsystem nach Anspruch 7, dadurch gekennzeichnet, daß in der Fahrbahn im Bereich der Verzweigung ein in Querrichtung zwischen zwei Betriebsstellungen verschiebbarer Plattenbauteil (37) mit zwei nebeneinander vorgesehenen Führungskanal-Abschnitten (38, 39) untergebracht ist, von denen der eine in der einen Betriebsstellung mit dem einen nachfolgenden Führungskanal (17) und der andere in der anderen Betriebsstellung mit dem anderen nachfolgenden Führungskanal (36) eine Verbindung herstellt.

10. Transportsystem nach einem der Ansprüche 3 bis 9, dadurch gekennzeichnet, daß in einer z.B. nischenförmigen Unterbrechung (26, 27) zumindest einer der Längsseitenwände (21, 24) des Führungskanals (17) ein aus einer Ruhelage, in der er seitlich zur Längsseitenwand (21, 24) ausgerichtet ist, in den Führungskanal (17) hinein bewegbarer, z.B. schwenkbarer, Bremshebel (28, 29) angeordnet ist.

11. Transportsystem nach einem der Ansprüche 1 bis 10, dadurch gekennzeichnet, daß die Querverschubrichtung (62) zumindest einen sich quer zu den Fahrbahnen erstreckenden Transportförderer (63, 64) mit wenigstens einem Mitnehmer (65, 66) für die Plattformen (3) aufweist.

12. Transportsystem nach Anspruch 11, dadurch gekennzeichnet, daß der mit den an der Plattform-Unterseite vorgesehenen Seitenführungseinrichtungen (10, 11), gegebenenfalls Führungsrolleneinheiten (16), zusammenarbeitende Mitnehmer (65, 66) in wenigstens einem Querkanal (72, 73) aufgenommen und geführt ist.

13. Transportsystem nach Anspruch 12 und nach einem der Ansprüche 3 bis 5, dadurch gekennzeichnet, daß der in der Ruhestellung in Ausrichtung zu einem der Führungskanäle (17) im Ankunftsbereich (48) der Station ausgerichtete Mitnehmer (65, 66) eine Aufnahme (67, 68) in Form eines Führungskanalabschnittes für die Führungsrolleneinheiten (16) aufweist.

14. Transportsystem nach einem der Ansprüche 11 bis 13, dadurch gekennzeichnet, daß der Transportförderer (63, 64) durch einen Endlosförderer, z.B. eine Endloskette, gebildet ist.

15. Transportsystem nach einem der Ansprüche 11 bis 14, dadurch gekennzeichnet, daß im Ankunftsbereich (48) sowie im Abfahrtsbereich (53) der Station jeweils mehrere, in ihrer jeweiligen Anzahl gleich viele Fahrbahnen (1) nebeneinander vorgesehen sind, um eine parallele Be- bzw. Entladung der Plattformen (3) zu ermöglichen, und am Transportförderer (63, 64) zumindest gleich viele Mitnehmer (65, 66) vorgesehen ist, deren Abstände voneinander den Abständen der Fahrbahnen (1), gegebenenfalls der Seitenführungseinrichtungen (10, 11) bzw. Führungskanäle (17), entsprechen.

16. Transportsystem nach einem der Ansprüche 3 bis 15, dadurch gekennzeichnet, daß die bzw. jede Plattform (3) an ihrer Unterseite zwei in Fahrtrichtung hintereinander angeordnete Führungsrolleneinheiten (16) aufweist.

17. Transportsystem nach Anspruch 16 und einem der Ansprüche 11 bis 15, dadurch gekennzeichnet, daß die Querverschubeinrichtung (62) zwei zueinander parallele Quer-Transportförderer (63, 64) aufweist, deren Abstand dem Abstand der Führungsrolleneinheiten (16) entspricht.

18. Transportsystem nach einem der Ansprüche 1 bis 17, dadurch gekennzeichnet, daß die Plattform (3) zumindest teilweise aus Permanentmagnetmaterial ausgebildet ist bzw. mit Permanentmagneten (76) ausgerüstet ist, die zum Heben und Führen der Plattform (3) mit in der Fahrbahn (1) vorgesehenen Elektromagneten (78) zusammenarbeiten, wobei die Fahrbahn (1) überdies mit einem Linearmotor (79) für die Plattform (3) ausgerüstet ist.

19. Transportsystem nach Anspruch 18, dadurch gekennzeichnet, daß die Elektromagnete (78) und/oder der Linearmotor (79) in Längs- oder Fahrtrichtung in getrennte, gesondert ansteuerbare Abschnitte (81) unterteilt sind, die aufeinanderfolgend erregbar bzw. aktivierbar sind.

20. Transportsystem nach Anspruch 19, dadurch gekennzeichnet, daß die Abschnitte (81) in ihrer Länge ungefähr der Länge der Plattformen (3) entsprechen.

21. Transportsystem nach Anspruch 19, dadurch gekennzeichnet, daß die Abschnitte (81) in ihrer Länge einer Gruppe von in einem Schwebeverband hintereinander zu transportierenden Plattformen (3) entsprechen.

22. Transportsystem nach Anspruch 19, dadurch gekennzeichnt, daß die Abschnitte (81) in ihrer Länge einem Teil der Länge der Plattformen (3) entsprechen und jeweils gleichzeitig mehrere Abschnitte (81) hintereinander, in zumindest ungefährer Entsprechung zur Länge der Plattformen (3), aktivierbar sind.

23. Transportsystem nach einem der Ansprüche 1 bis 22, dadurch gekennzeichnet, daß die Plattform (3) an ihrer Unterseite mit Bremskufen oder kufen- bzw. streifenartigen Bremsbelägen (80) versehen ist.

## Claims

1. A magnetic suspension transport system for motor vehicles, in particular trucks (9), comprising at least one track (1) supporting and guiding at least one substantially flat magnetic suspension platform (3) by means of a magnetic system (4, 5) and being under roof, e.g., arranged within a tunnel tube, over at least a substantial part of its length, wherein lateral guide means (10, 11) cooperating with each other on certain sections of the track (1) during normal operation are provided on the upper side of the track (1) and on the lower side of the magnetic suspension platform (3), characterized in that the lateral guide means are mechanical lateral guide means (10, 11), and in that an arrival and discharging area (48) and a departure and charging area (53) are provided one beside the other in a station, a transverse displacement means (62) being allocated to the platforms (3) for displacing the same generally transverse to the direction of movement, between the arrival and discharging area (48) of the station and the departure and charging area (53) of the station.

2. A transport system according to claim 1, characterized in that the track (1) has a generally plane upper side and the platform (3) guided thereabove has a generally plane lower side.

3. A transport system according to claim 1 or 2, characterized in that a guide channel (17; 31; 36) is provided in the upper side of the track and at least one guide roller unit (16) is mounted to the lower side of the platform, said guide roller unit comprising at least one guide roller (18, 19) which is rotatable about a vertical axis (20) and engages in the guide channel.

4. A transport system according to claim 3, characterized in that two guide rollers (18, 19) are superimposed in the or each guide roller unit, each of said guide rollers being guided on on a respective one of said two longitudinal side walls (21, 22) of the guide channel (17; 31; 36).

5. A transport system according to claim 4, characterized in that the two guide rollers (18, 19) are coaxially disposed and have different diameters and at least one longitudinal side wall (22) of the guide channel is step-shaped (23), the one, smaller-diameter guide roller (19) abutting on the narrower part of the guide channel (17) created by the step (23), on the stepped longitudinal side wall (24) thereof, and the other, larger-diameter guide roller (18) abutting on the opposite longitudinal side wall (21) of the guide channel (17).

6. A transport system according to any one of claims 3 to 5, characterized in that one guide channel (31) directly opens into the other (17) at track conversions.

7. A transport system according to any one of claims 3 to 5, characterized in that mechanical shunts (35) comprising laterally movable guide-channel side-wall parts are provided at track junctions.

8. A transport system according to claim 7, characterized in that at least one pivotable member comprising one or more guide-channel side-wall parts is provided in the track in the region of junction, forming a connection to one and the other of two consecutive diverging guide channels in any of two pivoted positions.

9. A transport system according to claim 7, characterized in that a plate member (37) displaceable in the transverse direction between two operation positions and comprising two adjacently arranged guide-channel sections (38, 39) is provided in the track in the region of junction, one of said guide-channel sections, in one operation position, forming a connection with one consecutive channel (17) and the other guide-channel section, in the other operation position, forming a connection with the other consecutive guide channel (36).

10. A transport system according to any one of claims 3 to 9, characterized in that a brake lever (28, 29) is arranged in a, for instance, niche-shaped interruption (26, 27) of at least one of the longitudinal side walls (21, 24) of the guide channel (17), said brake lever being movable, e.g., pivotable, into the guide channel (17) from an at-rest position laterally aligned with the longitudinal side wall (21, 24).

11. A transport system according to any one of claims 1 to 10, characterized in that the transverse displacement means (62) comprises at least one transport conveyor (63, 64) extending transverse to the tracks and having at least one follower (65, 66) for the platforms (3).

12. A transport system according to claim 11, characterized in that the follower (65, 66) cooperating with the lateral guide means (10, 11), optionally with the guide roller units (16), provided on the lower side of the platform is received and guided in at least one transverse channel (72, 73).

13. A transport system according to claim 12 and according to any one of claims 3 to 5, characterized in that the follower (65, 66), which is in alignment with one of the guide channels (17) in the arrival area (48) of the station in the at-rest position, comprises a receiving means (67, 68) in the form of a guide channel section for the guide roller units (16).

14. A transport system according to any one of claims 11 to 13, characterized in that the transport conveyor (63, 64) is formed by an endless conveyor, e.g., an endless chain.

15. A transport system according to any one of claims 11 to 14, characterized in that several tracks (1) are each arranged one beside the other in equal number both in the arrival area (48) and in the departure area (53) of the station in order to enable the parallel loading and unloading of the platforms (3), and that at least an equal number of followers (65, 66) are provided on the transport conveyor (63, 64) at distances from one another that correspond to the distances of the tracks (1), if desired of the lateral guide means (10, 11) or of the guide channels (17), respectively.

16. A transport system according to any one of claims 3 to 15, characterized in that the or each platform (3), on its lower side, comprises two guide roller units (16) consecutively arranged in the moving direction.

17. A transport system according to claim 16 and to any one of claims 11 to 15, characterized in that the transverse displacement means (62) comprises two parallel transverse transport conveyors (63, 64) whose distance corresponds to the distance of the guide roller units (16).

18. A transport system according to any one of claims 1 to 17, characterized in that the platform (3) at least partially is made of permanent magnetic material or is equipped with permanent magnets (76) cooperating with electromagnets (78) provided in the track (1) for lifting and guiding the platform (3), the track (1) additionally being equipped with a linear motor (79) for the platform (3).

19. A transport system according to claim 18, characterized in that the electromagnets (78) and/or the linear motor (79), in the longitudinal or moving direction, are subdivided into separate individually controllable sections (81) to be excited or activated one after the other.

20. A transport system according to claim 19, characterized in that the sections (81), in terms of length, approximately correspond to the length of the platforms (3).

21. A transport system according to claim 19, characterized in that the sections (81), in terms of length, correspond to a number of platforms (3) to be transported one after the other in a suspension group.

22. A transport system according to claim 19, characterized in that the sections (81), in terms of length, correspond to part of the length of the platforms (3), several sections (81) each being actuatable simultaneously one after the other in at least approximate correspondence with the length of the platforms (3).

23. A transport system according to any one of claims 1 to 22, characterized in that the platform (3), on its lower side, is provided with brake shoes or shoe-like or strip-shaped brake linings (80).

## Revendications

1. Système de transport à suspension magnétique pour des véhicules automobiles, notamment des camions (9), comportant au moins une voie (1) supportant et guidant au moins une plateforme à suspension magnétique (3) sensiblement plate au moyen d'un système magnétique (4, 5) et étant couverte d'un toit, par exemple placée dans un tube de tunnel, au moins sur une part substantielle de sa longeur, cependant que des moyens de guidage latérale (10, 11) coopérant l'un avec l'autre à des sections déterminées de la voie (1) en marche normale sont pourvus sur la face supérieure de la voie (1) et sur la face inférieure de la plateform à suspension magnétique (3), caractérisé en ce que les moyens de guidage latérale sont des moyens de guidage latérale mécaniques (10, 11), et en ce qu'une zone d'arrivée et de déchargement (48) ainsi qu'une zone de départ et de chargement (53) sont pourvues l'une à côté de l'autre à une station, un moyen de déplacement transversal (62) étant associé aux plate-formes (3) pour les déplacer, en général, transversalement au sens de marche, entre la zone d'arrivée et de déchargement (48) et la zone de départ et de chargement (53).

2. Système de transport selon la revendication 1, caractérisé en ce que la voie (1) a une face supérieure généralement plane et la plateforme (3) guidée au-dessus de celle-ci a une face inférieure généralement plane.

3. Système de transport selon la revendication 1 ou 2, caractérisé en ce qu'un canal de guidage (17; 31; 36) est prévu dans la face supérieure de la voie et au moins une unité de rouleaux de guidage (16) est agencée à la face inférieure de la plateforme, ladite unité de rouleaux de guidage portant au moins un rouleau de guidage (18, 19) tournant autour d'un axe vertical (20) et s'engrenant dans le canal de guidage.

4. Système de transport selon la revendication 3, caractérisé en ce que deux rouleaux de guidage (18, 19) sont superposés dans la ou chaque unité de rouleaux de guidage, un desdits rouleaux de guidage étant guidé sur la paroi respective des deux parois latéraux longitudinaux (21, 22) du canal de guidage (17; 31; 36).

5. Système de transport selon la revendication 4, caractérisé en ce que les deux rouleaux de guidage (18, 19) sont disposés coaxialement, ayant des diamètres differents, et au moins une paroi latérale longitudinale (22) du canal de guidage est formée en étages (23), l'un (19) des rouleaux de guidage ayant le diamètre plus petit étant appliqué à la part plus étroite du canal de guidage (17) formée par l'étage (23), sur la paroi latérale longitudinale étagée (24) de ce-ci, et l'autre (18) des rouleaux de guidage ayant le diamètre plus grand étant appliqué à la paroi latérale longitudinale opposée (21) du canal de guidage (17).

6. Système de transport selon l'une quelconque des revendications 3 à 5, caractérisé en ce qu'un canal de guidage (31) débouche directement dans l'autre (17) aux réunions des voies.

7. Système de transport selon l'une quelconque des revendications 3 à 5, caractérisé en ce que des aiguilles mécaniques (35) comportant des parts de paroi latérale de canal de guidage mobiles en sens latéral sont prévues à des jonctions de voie.

8. Système de transport selon la revendication 7, caractérisé en ce qu'au moins un élément pivotable comportant une ou plusieurs parts de paroi latérale de canal de guidage est pourvu dans la voie dans la zone de jonction, le(s)quel(s) élément(s) établie(nt) une liaison à un de deux canaux de guidage divergeants placés en aval.

9. Système de transport selon la revendication 7, caractérisé en ce qu'un élément de plaques (37) susceptible d'être déplacé en sens transversal entre deux positions d'opération et comportant deux sections de canal de guidage juxtaposées (38, 39) est prévu dans la voie dans la zone de jonction, l'un des deux sections de canal de guidage, dans l'une des positions d'opération, établiant une liaison avec l'un (17) des canaux placés an aval et l'autre des deux sections de canal de guidage, dans l'autre des positions d'opération, établiant une liaison avec l'autre (36) des canaux placés en aval.

10. Système de transport selon l'une quelconque des revendications 3 à 9, caractérisé en ce qu'un levier de frein (28, 29) est disposé dans un vide (26, 27), par exemple en forme de niche, ménagé dans au moins une des parois latéraux longitudinaux (21, 24) du canal de guidage (17), lequel levier est susceptible d'être déplacé, par exemple pivoté, d'une position de repos, dans laquelle il est aligné latéralement sur la paroi latérale longitudinale (21, 24), dans le canal de guidage (17).

11. Système de transport selon l'une quelconque des revendications 1 à 10, caractérisé en ce que le moyen de déplacement transversal (62) comporte au moins un convoyeur de transport (63, 64) s'étendant transversalement aux voies et étant muni d'au moins un entraîneur (65, 66) pour les plateformes (3).

12. Système de transport selon la revendication 11, caractérisé en ce que l'entraîneur (65, 66) coopérant avec les moyens de guidage latéral (10, 11) pourvus sur la face inférieure de la plateforme, le cas échéant avec les unités de rouleaux de guidage (16), est récu et guidé dans au moins un canal transversal (72, 73).

13. Système de transport selon la revendication 12 et selon l'une quelconque des revendications 3 à 5, caractérisé en ce qu'un logement (67, 68) en forme d'une section de canal de guidage est ménagé pour les unités de rouleaux de guidage (16) dans l'entraîneur (65, 66) qui, dans la position de repos, est aligné sur un des canaux de guidage (17) dans la zone d'arrivée (48) de la station.

14. Système de transport selon l'une quelconque des revendications 11 à 13, caractérisé en ce que le convoyeur de transport (63, 64) est constitué par un convoyeur sans fin, notamment une chaîne sans fin.

15. Système de transport selon l'une quelconque des revendications 11 à 14, caractérisé en ce que plusieurs voies (1) sont réspectivement prévues en nombre égal dans la zone d'arrivée (48) ainsi que dans la zone de départ (53) de la station l'une à côté de l'autre en vue de rendre possible le chargement et le déchargement parallèles des plateformes (3), et au moins un nombre égal d'entraîneurs (65, 66) est prévu sur le convoyeur de transport (63, 64) à des distances correspondant aux distances des voies (1), le cas échéant, respectivement des moyens de guidage latéral (10, 11) ou des canaux de guidage (17).

16. Système de transport selon l'une quelconque des revendications 3 à 15, caractérisé en ce que la ou chaque plateforme (3), sur sa face inférieure, comprend deux unités de rouleaux de guidage (16) disposées l'une après l'autre en sens de marche.

17. Système de transport selon la revendication 16 et l'une quelconque des revendications 11 à 15, caractérisé en ce que le moyen de déplacement transversal (62) comprend deux convoyeurs de transport transversaux (63, 64) parallèles, la distance desdits convoyeurs correspondant à la distance des unités de rouleaux de guidage (16).

18. Système de transport selon l'une quelconque des revendications 1 à 17, caractérisé en ce que la plateforme (3), au moins en partie, est realisée en un matériau magnétique permanent ou est munie d'aimants permanents coopérant avec d'aimants électriques (78) prévus dans la voie (1) en vue de lever et guider la plateforme (3), la voie (1) étant en plus équipée d'un moteur linéaire (79) pour la plateforme (3).

19. Système de transport selon la revendication 18, caractérisé en ce que les aimants électriques (78) et/ou le moteur linéaire (79), en sens longitudinal ou de marche, sont divisés en des sections distinctes (81) à commander séparément, lesdites sections étant susceptibles d'être excitées ou activées l'une après l'autre.

20. Système de transport selon la revendication 19, caractérisé en ce que les sections (81), en ce qui concerne leur longueur, correspondent à peu près à la longueur des plateformes (3).

21. Système de transport selon la revendication 19, caractérisé en ce que les sections (81), en ce qui concerne leur longueur, correspondent à un ensemble de plateformes (3) destinées à être transportées l'une après l'autre dans un groupe de suspension.

22. Système de transport selon la revendication 19, caractérisé en ce que les sections (81), en ce qui concerne leur longueur, correspondent à une partie de la longueur des plateformes (3), plusieurs sections (81), chaque fois, étant susceptibles d'être activées simultanément l'une après l'autre en correspondance approximative à la longueur des plateformes (3).

23. Système de transport selon l'une quelconque des revendications 1 à 22, caractérisé en ce que la plateforme (3), sur sa face inférieure, est munie de patins de freinage ou de garnitures de frein (80) en forme de patin ou de bande.
